(19) Europäisches Patentamt
European Patent Office
Office européen des brevets

(11) **EP 2 721 376 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **12731335.1**

(22) Anmeldetag: **13.06.2012**

(51) Int Cl.:
***G01F 15/00*** (2006.01)   ***G01F 15/06*** (2006.01)
***G01M 3/28*** (2006.01)

(86) Internationale Anmeldenummer:
**PCT/EP2012/061203**

(87) Internationale Veröffentlichungsnummer:
**WO 2012/171959 (20.12.2012 Gazette 2012/51)**

(54) **VERFAHREN UND VORRICHTUNG ZUM BEWERTEN DES VERBRAUCHS EINES MEDIUMS IN EINEM VERSORGUNGSSYSTEM**

METHOD AND APPARATUS FOR ASSESSING THE CONSUMPTION OF A MEDIUM IN A SUPPLY SYSTEM

PROCÉDÉ ET DISPOSITIF POUR L'ÉVALUATION DE LA CONSOMMATION D'UN MILIEU DANS UN SYSTÈME D'ALIMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2011 DE 102011105778**

(43) Veröffentlichungstag der Anmeldung:
**23.04.2014 Patentblatt 2014/17**

(73) Patentinhaber: **Techem Energy Services GmbH 65760 Eschborn (DE)**

(72) Erfinder:
• **LEBLANG, Lars**
**60433 Frankfurt am Main (DE)**
• **OHL, Jochen**
**64823 Groß-Umstadt (DE)**

(74) Vertreter: **Keil & Schaafhausen Patent- und Rechtsanwälte Friedrichstrasse 2-6 60323 Frankfurt am Main (DE)**

(56) Entgegenhaltungen:
**EP-A1- 2 249 132      WO-A1-02/077581**
**WO-A1-2005/047828   WO-A2-02/073735**
**KR-B1- 100 973 662   US-A1- 2006 059 977**
**US-B1- 7 920 983**

**Beschreibung**

Die Erfindung betrifft ein Verfahren und eine Vorrichtung zum Bewerten des Verbrauchs eines Mediums in einem Versorgungssystem insbesondere eines Gebäudes für dieses Medium gemäß dem Oberbegriff des Anspruchs 1, d.h. einem Versorgungssystem, mit welchem dieses Medium in einem System, insbesondere dem Gebäude, räumlich verteilt wird und bei dem an verschiedenen Orten in dem System ein vorgesehener Verbrauch des Mediums stattfindet. Das Verfahren verwendet mindestens einen Verbrauchszähler, bei dem aus über die Zeit erfassten Verbrauchsmesswerten des Verbrauchszählers Verbrauchsstromwerte für das Medium ermittelt werden, mit denen der vorgesehenne Verbrauch des Mediums durch einen Verbraucher über die Zeit als Verbrauchsmessung erfasst wird. Die Verbrauchsstromwerte bezeichnen den Strom des Mediums in dem Versorgungssystem an dem Ort des Verbrauchszählers. Dies bedeutet, dass der Zähler eine Zapfung des Mediums aus dem Versorgungssystem an einer dem Verbrauchszähler nachgeordneten Stelle erfasst.

Verfahren dieser Art werden neben der eigentlichen Verbrauchsmessung bspw. zur Erkennung von Lecks in einem Wasserversorgungssystem von Gebäuden eingesetzt, wobei die Leckage-Erkennung einen Rohrbruch, eine unberechtigte Wasserentnahme und/oder eine Leckage mit minimalen Wasseraustritt erkennen sollte.

So beschreibt die DE 10 2004 016 378 die Messung eines relativen Druckabfalls über ein Zapfventil, um einen stationären Zustand zu ermitteln, wenn alle Verbraucher geschlossen sind oder eine gleichmäßige Zapfung vorliegt. Wenn dieser stationäre Zustand für eine bestimmte Zeit erreicht ist, werden in einem Leckagebestimmungsbetrieb das Zapfventil gezielt geschlossen und der Eingangsdruck gemessen. Ferner wird der Druckabfall in dem abgesperrten Teil des Rohrsystems bestimmt, um auf eine mögliche Leckage zu schließen. Hierbei ist nachteilig, dass eine gesonderte Messung zur Leckagebestimmung stattfinden muss, durch die ein Verbraucher gegebenenfalls behindert werden kann, weil die Wasser- bzw. Mediumzufuhr dafür unterbrochen wird. Umgekehrt können Nutzerentnahmen während der Messung die Messergebnisse verfälschen.

Die Grundidee der DE 10 2006 013 610 B4 liegt darin, ein in dem Verbrauchszähler gewonnenes Informationssignal an eine ohnehin im Haus vorgesehene Überwachungseinrichtung zu senden, die Teil eines mehrere solche Überwachungseinrichtungen aufweisenden Netzwerks ist. Von dieser Überwachungseinrichtung wird das Informationssignal dann als alarmauslösendes Signal an mindestens eine weitere Überwachungseinrichtung übertragen. Eine mit diesem System umgesetzte Leckerkennung funktioniert üblicherweise so, dass bei einem Durchfluss über einen langen Zeitraum ein Leck angenommen wird. Dies ist jedoch ungenau, weil bspw. bei einer lang andauernden Gartenbewässerung ein solcher Zustand auch im Normalbetrieb eintreten kann.

Schließlich ist aus der WO 2007/047847 A2 eine automatische Detektion eines ungewöhnlichen Verbrauchs bei einem Verbrauchsmessgerät bekannt, bei dem der Verbrauch durch das Verbrauchsmessgerät bestimmt und anschließend mit einem Problem-Ereigniskriterium verglichen wird. Als geeignete Kriterien werden bspw. Schwellen im Verbrauchsstrom innerhalb eines Auswertezeitraums verwendet. Das Auftreten solcher Ereignisse wird gezählt und bei Überschreiten einer gewissen Anzahl solcher ungewöhnlichen Verbrauchsereignisse innerhalb eines Beobachtungszeitraums ein Alarmsignal ausgesendet. Dabei ist vorgesehen, dass die Kriterien durch ein selbstlernendes Verfahren anpassbar sind.

Die DE 197 06 564 A1 beschreibt eine Leckwasser-Erfassungs- und Stoppeinrichtung für den Haushalt, bei der ein Durchflussmengenzähler mit elektronischer Messwertausgabe im Zuleitungsstrang des Rohrsystems und einer weiterer Durchflussmengenzähler zur Erkennung kleinerer Leckagen angeordnet ist. Mittels vorbestimmten oder programmierbaren Algorithmen werden in diesem System aus einzelnen Sensormeldungen Leckagen erkannt und Drossel- bzw. Absperrvorgänge eingeleitet. Als Kriterien für den Vergleich mit einem jeweils gemessenen Einzelwert eines Durchflussmengenmessers das Überschreiten einer vorbestimmten Durchflussmenge, das Auftreten eines stetigen kleinsten Durchsatzes oder das Abweichen der Durchflussweise von einem auf adaptivem Wege gefundenen und gespeicherten Verbrauchsmuster herangezogen. Die Verbrauchsmuster werden als Einprägung mengenmäßig und zeitlich zusammenhängender Verbrauchsereignisse erfasst. Die einzelnen gemessenen Verbrauchsereignisse werden dann mit diesen Normalwerten verglichen, die eine Korrelation von Menge und Zeit vorgeben. Dies macht das vorgeschlagene Verfahren wenig flexibel, so dass auch bei normalen Verbrauchsereignissen, die ausnahmeweise zu anderen Zeiten auftreten, Fehlabschaltungen auftreten können.

Bei allen diesen vorbeschriebenen Verfahren zur Bewertung des Verbrauchs besteht das Problem, dass einzelne, durch einen Verbrauchszähler erfasste Verbrauchswerte jeweils mit einem Schwellenwert verglichen werden, um kritische oder außergewöhnliche Verbrauchswerte festzustellen. Dies ist jedoch häufig nicht sachgerecht, da je nach Verbrauchsverhalten konkrete Verbrauchswerte in einem Fall ein abnormales Verbrauchsverhalten (bspw. bei einer Leckage) und in einem anderen Fall ein normales Verbrauchsverhalten (bspw. bei einer Gartenbewässerung) bedeuten.

Die DE 692 09 624 T2 beschreibt eine statistische Fluidleckagebestimmung an einer Rohrleitung, bei der bspw. die Fluiddurchflussmenge über einen bestimmten Zeitraum zwischen einem ersten und einem zweiten Zeitpunkt an einer Stelle der Rohleitung gemessen und für die gemessene Verteilung eine statistische Wahrscheinlichkeit berechnet wird sowohl unter der Annahme, dass kein Leck auftritt, als auch unter der Annahme, dass ein Leck auftritt. Dann wird die Annahme als wahr ausgewählt, für welche die Wahrscheinlichkeit größer ist, die gemessene Verteilung zu erhalten. Ggf. kann eine zusätzliche Messung zu den verschiedenen Zeitpunkten einer zweiten Stelle der Rohrleitung stattfinden. Bei den theoretisch angenommenen statistischen Verteilungen kann es sich insbesondere Gaußsche Verteilungen mit im Wesentlichen gleichen Varianzen, aber verschiedenen Mittelwerten handeln. Das Grundkonzept liegt also darin, Messungen innerhalb eines Zeitintervalls vorzunehmen, in denen theoretisch keine Veränderungen, des gemessenen Stroms (Fluiddurchflussmenge) stattfinden und dann durch eine Anpassung (Fit nach dem Waldschen sequentiellen Likelihoodverhältnlstests) festzustellen, ob das Verhalten der gemessenen Verteilung eher der Annahme einer Verteilung mit oder ohne Leckage entspricht. Entsprechend bezieht sich die Erfindung nur auf Überprüfen einer Transport-Rohrleitung, in welcher ein Fluid ohne eine geplante Entnahme fließt. In einem Verbrauchsversorgungssystem innerhalb eines Gebäudes, in dem während der Messung auch reguläre Entnahmen stattfinden können, ist das System nicht geeignet, weil das System nicht in der Lage Ist, verschiedene nominale Verbräuche zu verarbeiten.

Aus der WO 02/077581 A1 ist das Bilden von Histogrammen mit Durchflussmesswerten In einem Trinkwasserversorgungssystem bekannt, wobei die Durchflussmesswerte Messwertintervallen zugeteilt und in den entsprechenden Histogrammklassen gezählt werden. Die Auswertung der Histogramme dient dazu, den Verschleiß des Wasserzählers genauer abzuschätzen und einen kostenintensiven zu frühen Austausch des Wasserzählers zu vermeiden. Ein weiteres Histogramm wird als Verbrauch pro Tageszeitraum geführt und soll eine tageszeitabhängige Tarifierung ermöglichen. Eine Leckageerkennung wird nicht vorgeschlagen.

Die WO 2005/047828 A1 beschreibt ein Verfahren zur Leckageerkennung, bei dem ein minimaler Verbrauchswert festgelegt wird und überwacht wird, ob der Verbrauchswert über einen Zeitraum von 24 Stunden in jedem 15 minütigen Messintervall diesen minimalen Verbrauchswert überschreitet. In diesem Fall wird eine Leckage angenommen. Anstelle der kontinuierlichen Überwachung kann auch vorgesehen werden, dass innerhalb eines 24 stündigen Zeitraums die Messintervalle gezählt werden, in denen der minimale Verbrauchswert überschritten ist. Wird ein fest vorgegebener Schwellenwert für die Anzahl der Messintervalle überschritten, wird eine Leckage angenommen.

Aus der US 2006/0059977 A1 ist ein ähnlicher Ansatz zur Leckageerkennung bekannt. Auch hier wird der Mediumverbrauch kontinuierlich überwacht. Sofern über einen bestimmten Zeitraum zumindest ab und zu ein Verbrauchswert festgestellt wird, der keinen Verbrauch anzeigt, wird angenommen, dass keine Leckage vorliegt.

Aufgabe der vorliegenden Erfindung ist es daher, eine zuverlässigere Bewertung des Verbrauchs eines Mediums in einem Verbrauchsversorgungssystem insbesondere anhand der erfassten Verbrauchsstromwerte zu erreichen.

Diese Aufgabe wird erfindungsgemäß mit den Merkmalen der nebengeordneten Ansprüche 1 und 11 gelöst, die auf ein Verfahren und eine zur. Durchführung des Verfahrens eingerichtete Vorrichtung gerichtet sind.

Bei dem vorgeschlagenen Verfahren ist insbesondere vorgesehen, dass aus den Verbrauchsstromwerten, d. h. den im Rahmen der Verbrauchsmessung durch den Verbrauchszähler erfassten Verbrauchsstromwerten, eine Häufigkeitsverteilung gebildet wird und der Verbrauch durch eine Auswertung der Häufigkeitsverteilung bewertet wird. Der erfindungsgemäße Vorteil dieses Verfahrens liegt darin, dass das Erkennen bzw. Bewerten eines ungewöhnlichen Verbrauchsmusters nicht anhand eines Einzelwertes, sondern aufgrund der Häufigkeit der verschiedenen Verbrauchsstromwerte insbesondere relativ zueinander erfolgt, ohne dass eine bestimmte zeitliche Korrelation zwischen den verschiedenen Verbrauchsstromwerten berücksichtigt wird. Eine zeitliche Korrelationsinformation ist in den Häufigkeitsverteilungen nicht mehr ersichtlich. Hierdurch lässt sich eine bessere Identifizierung von "normalem" Verbrauchsverhalten und von "abnormalem" Verbrauchsverhalten erreichen. Das abnormale Verbrauchsverhalten wird nachfolgend auch Leckage genannt, ohne unbedingt darauf beschränkt zu sein, dass ein unvorhergesehener oder ungewünschter Austritt des Mediums aus dem Versorgungssystem auftritt.

Erfindungsgemäß werden also nicht einzelne Verbrauchsereignisse, sei es als einzelne Messwerte oder als mehrere Messwerte eines zeitlichen länger andauernden Verbrauchs bspw. im Rahmen einer Gartenwässerung bewertet, sondern die im Rahmen der Verbrauchsmessung ohnehin erfassten Verbrauchsmesswerte der Verbrauchszähler über die Zeit in einer Häufigkeitsverteilung gesammelt, die dann ausgewertet wird. Anders als die bekannten Verfahren zur Leckageerkennung werden daher erfindungsgemäß nicht einzelne Verbrauchsereignisse bewertet, die als Einzelmessung oder Mehrfachmessung in einem definierten Zeitraum erfasst sein können, sondern die normalen Verbrauchswerte in einer Häufigkeitsverteilung gesammelt und bewertet. Das erfindungsgemäße Verfahren verwendet also ein mit einem Verbrauchszähler ausgestattetes Versorgungssystem, bei dem über die Zeit Verbrauchswerte des Verbrauchszählers als Verbrauchsstromwerte erfasst werden, um aus einer Häufigkeitsverteilung dieser Werte eine Leckage zu ermitteln. Anders als bekannte Verfahren eignet sich das erfindungsgemäße Verfahren daher nicht, einzelne Verbrauchsereignisse als das Auftreten eines Lecks in dem Versorgungssystem zu erkennen und bspw. sofort Absperrmaßnahmen einzuleiten. Die Auswertung der Häufigkeitsverteilung über einen längeren Zeitraum, in dem es erfindungsgemäß auch zum Auftreten nominaler Verbräuche des Mediums, bspw. durch eine Wasserentnahme, kommt, erlaubt es, eine zeitlich andauernde Leckage gerade auch mit kleineren Leckagemengen, die dem Verbraucher ggf. nicht unbedingt auffallen müssen, zu identifizieren, ohne dass zusätzlich zu den ohnehin vorhandenen Verbrauchsmessgeräten zusätzliche Messgeräte installiert oder zusätzliche Messungen durchgeführt werden müssen. Erfindungsgemäß werden also die Verbrauchsmessungen der Verbrauchszähler zur Leckerkennung verwendet. Während dieser Zeit treten nominal aufgrund eines vorgesehen Verbrauchs unterschiedliche Messwerte auf, die in der Häufigkeitsverteilung bewertet werden.

Erfindungsgemäß kann das in dem Versorgungssystem verteilte Medium insbesondere Wasser, Gas oder ein sonstiges Fluid sein. Als Anwendungsgebiete kommen daher insbesondere eine Verbrauchswerterfassung in Gebäuden in Frage, aber auch eine technische Überwachung von Anlagen. Schließlich kann das Medium anstelle eines Fluids auch bspw. Strom sein, bei dem eine Leckage bspw. durch einen Kriechstrom auftreten kann. Entsprechend können Verbrauchszähler erfindungsgemäß Wasserzähler, Gaszähler bzw. allgemein Fluidzähler sein, für die das vorgeschlagene Verfahren besonders geeignet ist. Eine mögliche Anwendung ergibt sich, wie bereits erwähnt, jedoch auch bei Stromzählern oder sonstigen Verbrauchszählern. Bei einem Fluid als Medium kann der Verbrauchsstromwert insbesondere ein Volumenstromwert sein.

Bei Fluiden kann eine Leckage sowohl ein Rohrbruch mit großen Mengen an austretendem Fluid als auch eine Leckage mit minimalem Fluidaustritt sein. Hierdurch ergeben sich unterschiedliche Verbrauchsmuster, die bewertet werden sollen. Anhand von Einzelwerten ist nicht festzustellen, ob ein typisches oder nicht typisches Verbrauchsmuster bzw. ein normaler oder abnormaler Verbrauch vorliegt. Bei Strom eignet sich das vorgeschlagene Verfahren insbesondere zum Feststellen hoher Stromverbräuche, bspw. eines höheren Verbrauchs eines bestimmten Verbrauchers innerhalb eines Gebäudes, zum Feststellen von Periodizitäten, bspw. eines alten Kühlschranks, sowie das Auftreten dauerhafter Kriechströme.

Der erfindungsgemäße Vorteil liegt darin, dass keine Grenzwerte für einzelne Verbrauchsstromwerte festgelegt werden müssen, sondern eine Bewertung des Verbrauchs jeweils in Relation zu der aufgetretenen Häufigkeitsverteilung stattfindet. So muss bspw. auch für das Erkennen eines permanenten Durchflusses kein Grenz- oder Schwellenwert vorgegeben werden, sodass sich das Verfahren sowohl für das Erkennen von kleinen, über einer Anlaufschwelle eines Verbrauchszählers liegenden Verbrauchsströmen als auch für große Verbrauchsströme eignet. Durch die Auswertung der Häufigkeitsverteilung kann, wie später noch im Detail beschrieben wird, auch die Höhe des Leckageverbrauchsstroms, bei Fluiden also insbesondere des Leckagevolumenstroms, bestimmt werden. Durch das Bilden und Auswerten der Häufigkeitsverteilung werden also nicht Momentanwerte des Verbrauchsstroms betrachtet, sondern es wird der Verbrauchsstrom über einen definierbaren Auswertezeitraum ausgewertet.

Eine typische Zählertechnologie, die sich zur Durchführung des vorgeschlagenen Verfahrens eignet, betrifft erfindungsgemäß Zähler, die der Erfassung von Flüssigkeits- oder Gasvolumen zum Zwecke der Verbrauchsberechnung dienen. Derartige Zähler weisen üblicherweise einen Volumensensor, eine Übertragungsschnittstelle und Auswerte- bzw. Anzeigeeinheit auf, die auch als Zählwerk bezeichnet wird. Der Volumensensor erfasst als Verbrauchstrom den Volumenstrom des Fluids, d.h. die Menge des an dem Zähler vorbeiströmenden Fluids in einem bestimmten Zeitintervall. Dieser Volumenstrom wird mittels der Übertragungsschnittstelle an das Zählwerk übertragen, welches dann üblicherweise das kumulierte Volumen bzw. allgemeiner den kumulierten Verbrauch in den gemessenen Einheiten anzeigt.

Die Übertragung des Verbrauchsstroms an das Zählwerk kann kontinuierlich, bspw. durch mechanische Flügelradzähler mit Magnetkupplung, oder diskontinuierlich über Pulse, bspw, elektronische abgetastete Volumensensoren erfolgen. Ein übertragener Puls steht dabei für ein bestimmtes Verbrauchs- bzw. Verbrauchsstrominkrement, insbesondere eine Volumen- bzw. Volumenstrominkrement. Der Verbrauchsstrom kann alternativ auch mit einem Ultraschallzähler ermittelt werden, welcher bspw. Ultraschallwellen in und entgegen der Fließrichtung eines flüssigen Mediums aussendet und eine Laufzeitdifferenz der Ultraschallwellen misst. Diese hängt von der Fließgeschwindigkeit des Mediums ab und erlaubt so, einen Volumenstrom bzw. Volumeninkremente zu bestimmen.

Da das vorgeschlagene Verfahren eine Auswertelogik voraussetzt, die bspw. in einem Mikroprozessor des Zählers realisiert sein kann, wird nachfolgend davon ausgegangen, dass der Zähler eine diskontinuierliche Übertragung von Pulsen, d.h. Volumeninkrementen zur Verfügung stellt. Mechanische Zähler mit kontinuierlicher Übertragung können mittels Zusatzmodulen, welche die bewegbare Mechanik abtasten und die analogen Signale digital konvertieren (Analog-Digital-Konverter), ebenfalls mit mikroprozessorbasierten Auswerteeinheiten ausgestattet werden. In dieser Mikroprozessor-Einheit, bzw. allgemeiner Recheneinheit, kann das erfindungsgemäß vorgeschlagene Verfahren dann realisiert sein.

Erfindungsgemäß werden die Verbrauchsstromwerte zur Bildung der Häufigkeitsverteilung in mindestens zwei, vorzugsweise aber in mehr Verbrauchsstromklassen eingeordnet. Die Häufigkeit des Vorkommens von Verbrauchsstromwerten wird dann jeweils als Einträge in einer Verbrauchsstromklasse gezählt. Dies entspricht der Bildung eines Histogramms, bei dem die Verbrauchsstromwerte bestimmten Verbrauchsstromwertklassen zugeordnet werden.

Dabei werden die Verbrauchsstromklassen durch vorgebbare, d.h. durch den Nutzer und/oder Betreiber des Versorgungssystems und/oder ein implementiertes Lernverfahren in der Recheneinheit konfigurierbar vorgegebene, Grenzwerte definiert. Besonders geeignet sind Verfahren, bei denen sowohl ein oberer als auch ein unterer Grenzwert vorgegeben werden kann, wobei dies auch durch Vorgabe eines Grenzwertes und eines ausgehend von diesem Grenzwert zu erfassenden WerteIntervalls erreicht werden kann. Gemäß einer bevorzugten Ausführungsform der Erfindung entspricht der obere Grenzwert der Verbrauchsstromklasse mit den niedrigsten Verbrauchsstromwerten, nachfolgend auch als "erste Verbrauchsstromklasse" bezeichnet, dem Anlaufverbrauchsstrom bzw. Anlaufvolumenstrom des Verbrauchszählers. Somit beschreibt die erste Verbrauchsstromklasse erfindungsgemäß einen Zustand ohne gemessenen bzw. messbaren Verbrauch.

Erfindungsgemäß kann die Häufigkeitsverteilung über einen vorgebbaren, d.h. bei der Installation, durch den Nutzer und/oder Betreiber des Versorgungsystems und/oder durch ein implementiertes Lernverfahren konfigurierbaren vorgegebenen, Auswertezeitraum gebildet werden. Es ist auch bspw. auch möglich, den Auswertezeitraum nachträglich im laufenden Betrieb bspw. über einen Remote-Zugriff an die Erfordernisse der Anlage und/oder Installation anzupassen. Sinnvolle Auswertezeiträume sind bspw. 6, 12 oder 24 Stunden. Ggf. kann auch eine Aufteilung nach Tageszeiten mit typischen Verbrauchsmustern, bspw. morgens, vormittags, mittags, nachmittags, abends, nachts, usw. erfolgen. Spätestens nach Abschluss eines Auswertzeitraums, ggf. aber auch kontinuierlich oder quasi kontinuierlich während des Bildens der Häufigkeitsverteilung, findet dann eine Bewertung statt.

Vorzugsweise werden mehrere Auswertezeiträume der Häufigkeitsverteilung über eine bestimmte Auswertezeitperiode, bspw. eine Woche, einen Monat oder dergleichen, gespeichert, um auch einen Vergleich verschiedener Häufigkeitsverteilungen in verschiedenen Auswertezeiträumen vornehmen zu können. Erfindungsgemäß kann in diesem Fall auch vorgesehen sein, mehrere Häufigkeitsverteilungen für die Ermittlung von Langzeitdurchschnittswerten zusammenzufassen und auszuwerten. Hierdurch lassen sich bspw. Vergleiche von Sommer, Winter und dem Gesamtjahr anstellen und ggf. auch archivieren. Nach Abschluss des Auswertezeitraums und der sich daran typischerweise anschließenden Auswertung der aktuellen Häufgkeitsverteilung findet ein Rücksetzen der aktuellen Häufigkeitsverteilung (d.h. ein Nullen der aktuellen Häufigkeitsverteilung) statt. Anschließend wird eine neue aktuelle Häufigkeitsverteilung ermittelt, wobei die vorangegangene aktuelle Häufigkeitsverteilung wie vorerwähnt ggf. gespeichert wird bzw. worden ist.

Erfindungsgemäß ist vorgesehen, zur Auswertung der Häufigkeitsverteilung für das Erkennen einer Leckage des Mediums die Anzahl von Verbrauchsstromwerten innerhalb von Verbrauchsstromklassen mit der Anzahl von Verbrauchsstromwerten innerhalb mindestens einer anderen Verbrauchsstromklasse zu vergleichen. Gemäß einer besonders bevorzugten Ausführungsform der Erfindung kann zur Auswertung der Häufigkeitsverteilung die Anzahl von Verbrauchsstromwerten, die Anzahl von Verbrauchsstromwerten innerhalb von Verbrauchsstromwertintervallen und/oder die Anzahl von Verbrauchsstromwerten innerhalb von Verbrauchsstromklassen mit vorgebbaren Schwellenwerten verglichen werden. Die Schwellenwerte können bezogen auf die Anzahl von Verbrauchsstromwerten absolute Werte oder relative Werte sein, wobei relative Werte insbesondere auf die Gesamtzahl der in der Häufigkeitsverteilung enthaltenen Verbrauchsstromwerte bezogen sein können. In diesem Zusammenhang, und bezogen auf diese Anmeldung, wird unter der Anzahl von Verbrauchsstromwerten sowohl die Anzahl von mit genau diesem

Wert vorliegenden Verbrauchsstromwerten (bspw. so wie sie bei einer Digitalisierung der Messwerte gebildet wird) als auch die Anzahl von Verbrauchsstromwerten innerhalb der mit einem oberen und unteren Grenzwert definierten Verbrauchsstromklassen als auch die Anzahl von Verbrauchsstromwerten innerhalb von anderweitig definierten Verbrauchsstromwertintervallen verstanden. Dies gilt insbesondere, wenn die verschiedenen Alternativen nicht explizit aufgeführt werden.

Gemäß einer bevorzugten Weiterentwicklung des vorgeschlagenen Verfahrens können die Schwellenwerte gelernt werden, bspw. durch eine arithmetische Mittelwertbildung aus der Häufigkeitsverteilung in Zeitspannen, in denen ein normales Verbrauchsverhalten ohne Leckage oder sonstige abnormale Einflüsse vorlag. Dies kann vorzugsweise bei der Installation oder Überprüfung des Versorgungssystems geschehen. Es ist auch möglich, dass der Benutzer oder Betreiber autorisiert ist, derartige Lernzeiträume bspw. in Abhängigkeit von während des Betriebs festgestellten Besonderheiten der Anlage, ggf. auch durch Fernzugriff, zu definieren.

Gemäß einer weiteren, zusätzlich oder alternativ durchführbaren Möglichkeit zur Auswertung der Häufigkeitsverteilung kann vorgesehen werden, dass eine Referenz-Häufigkeitsverteilung gebildet und mit einer gebildeten Häufigkeitsverteilung, insbesondere der jeweils aktuellen Häufigkeitsverteilung, verglichen wird. Dieser Vergleich kann vorgenommen werden, indem vorzugsweise die Anzahl der Verbrauchsstromwerte in der aktuellen Häufigkeitsverteilung mit der Anzahl der Verbrauchsstromwerte in der Referenz-Häufigkeitsverteilung verglichen wird, wobei die bspw. durch eine Differenz gebildete Abweichung in der Anzahl mit einem vorgebbaren, d.h. bei der Installation und/oder später durch einen Nutzer, Verwalter oder automatisch durch eine Konfigurationseinrichtung parametrierbaren bzw. parametrierten, Schwellenwert verglichen wird. Dieser Schwellenwert kann ein absoluter oder relativer Wert sein, wobei der besondere Vorteil der Auswertung von Häufigkeitsverteilungen insbesondere dann erreicht wird, wenn dieser sowie ggf. auch die weiteren erwähnten Schwellenwerte relative Schwellenwerte sind, d.h. diese Schwellenwerte bezogen auf die Gesamtzahl der Einträge in der Häufigkeitsverteilung bestimmt sind. Dies ermöglicht es auch, während des Sammelns der Verbrauchsstromwerte in der Häufigkeitsverteilung bereits eine Trendanalyse vorzunehmen. Ergänzend kann dann vorzugsweise nach Abschluss des zeitlich definierten Auswertezeitraums, auch ein absoluter Verbrauchsstrom innerhalb dieses Zeitintervalls bewertet werden.

Erfindungsgemäß kann eine Referenz-Häufigkeitsverteilung insbesondere auch gelernt werden, indem die ermittelten Verbrauchsstromwerte der Referenz-Häufigkeitsverteilung hinzugefügt werden. Dies kann durch unmittelbare Übernahme der Verbrauchsstromwerte aus einem ausgewählten Zeitraum erfolgen, von dem vorzugsweise bekannt ist, dass normale Verbrauchsbedingungen vorliegen und keine Leckage aufgetreten ist. Alternativ oder zusätzlich kann auch eine bereits vorhandene Referenz-Häufigkeitsverteilung adaptiert werden. Hierzu kann in der vorhandenen Referenz-Häufigkeitsverteilung eine Gewichtung der vorhandenen Anzahl von Verbrauchsstromwerten mit der Anzahl der aktuell ermittelten Verbrauchsstromwerte erfolgen, ggf. auch unter Berücksichtigung des Auswertezeitraums. Zur Berücksichtigung des Auswertezeitraums kann bspw. eine zeitliche Normierung erfolgen. Entsprechend der weiter oben gegebenen Definition kann die vorhandene Anzahl von Verbrauchsstromwerten auch die Anzahl von Verbrauchsstromklassen oder Verbrauchsstromintervallen sein.

Eine weitere, alternative oder zusätzliche Möglichkeit zur Auswertung der Häufigkeitsverteilung liegt darin, die relative Anzahl von Verbrauchsstromwerten mit einer diesem Verbrauchsstromwert zugeordneten Zugehörigkeitsfunktion zu bewerten, wobei die Bewertungen der Zugehörigkeitsfunktion verschiedener Verbrauchsstromwerte zu einer Bewertung des Verbrauchs oder Gesamtverbrauchs zusammengefasst werden. Dabei kann die Anzahl eines Verbrauchsstromwertes die Anzahl eines einzelnen Werts des Verbrauchsstroms sein, bspw. wie er durch eine Digitalisierung vorgegeben wird, aber auch die Anzahl von Einträgen in einer Verbrauchsstromklasse oder einem Verbrauchsstromintervall, wie sich auch aus der allgemein betroffenen Definition bereits ergibt. Auch das Zusammenfassen der Zugehörigkeitsfunktionen verschiedener Verbrauchsstromwerte kann durch eine entsprechende Zugehörigkeitsfunktion erreicht werden, bspw. durch eine tabellarische Bewertung der zusammenzufassenden Zugehörigkeitsfunktionen und Zuweisung einer neuen Zugehörigkeitsfunktion mit dem Bewertungsergebnis.

Ggf. zusätzlich zu der Bewertung des Verbrauchs eines einzelnen Verbrauchszählers, aber auch als einzige Auswertungsmethode kann bei dem vorbeschriebenen Verfahren der bzw. ein zu überwachender Verbrauchsstromwert aus der Differenz der Verbrauchsstromwerte zweier Verbrauchszähler gebildet werden. In die Häufigkeitsverteilung wird dann die Differenz zweier einzelner Verbrauchszähler, eines Verbrauchszählers und einer Verbrauchszählergruppe, d. h. dem zusammengefassten Verbrauch einer Gruppe von Verbrauchszählern, oder zweier Verbrauchszählergruppen eingetragen und diese Differenz dann ausgewertet. Sinnvoll ist dieses Verfahren insbesondere bei Versorgungssystemen mit einem Hauptzähler und mindestens einem Unterzähler oder einer Unterzählergruppe, um einen Mediumklau zwischen dem Hauptzähler und dem oder den Unterzählern festzustellen oder ein Leck in der Verteilleitung festzustellen. Dazu wird erfindungsgemäß die Differenz gebildet zwischen dem Hauptzähler, bspw. eines Gebäudes an einem zentralen Wasseranschluss, und der Summe der dem Hauptzähler nachgeordneten Unterzähler, bspw. einem einzelnen Wohnungszähler oder einer Gruppe von mehreren Wohnungszählern.

Bei diesem Verfahren kann der Mediumklau oder das Leck in der Verteilleitung festgestellt werden, weil der Hauptzähler das Medium erfasst, nicht jedoch der Unterzähler bzw. die Summe der dem Hauptzähler nachgeordneten Unterzähler. Erfindungsgemäß kann das vorgeschlagene Verfahren in einem Verbrauchszähler oder einer Datensammelstelle durchgeführt werden. Unter Datensammelstelle soll eine Einheit verstanden werden, an welche die einzelnen Verbrauchszähler die Verbrauchswerte übermitteln. Der Vorteil einer Datensammelstelle liegt darin, dass die einzelnen Verbrauchszähler einfacher ausgebildet sein können, da die Verfahren zum Bewerten dort nicht installiert bzw. implementiert zu werden brauchen. In der Datensammelstelle liegen dann ohnehin alle für die Durchführung des benötigten Verfahrens notwendigen Verbrauchswerte vor. Hier ist eine statistische Bewertung der Häufigkeitsverteilung bzw. Häufigkeitsverteilungen einfach möglich. Ggf. kann die Datensammelstelle dazu eingerichtet sein, eine Leitstelle, eine Zentrale oder dergleichen zu benachrichtigen oder die Bewertung des Verbrauchs in einem durch den Nutzer und/oder Betreiber des Versorgungssystems aufrufbaren Portal zur Verfügung zu stellen.

In Weiterentwicklung des vorgeschlagenen Verfahrens kann bei dem Feststellen einer Leckage des Mediums in dem Versorgungssystem aus der Häufigkeitsverteilung der einzelnen Verbrauchswerte vorzugsweise auch die Menge des ausgetretenen Mediums ermittelt werden. Dazu werden die Anzahl der Verbrauchsstromwerte, Verbrauchswertintervalle oder Verbrauchsstromklassen ermittelt und hieraus über den Erfassungszeitraum auf die Menge des ausgetretenen Volumens eines Fluids bzw. allgemein des Verbrauchs des Mediums rückgeschlossen. Der Erfassungszeitraum wird dazu entweder mit erfasst und als Messwertpaar dem Verbrauchsstromwert zugewiesen. Alternativ können die Verbrauchstromwerte auch in regelmäßigen, vorgegebenen und bekannten Zeitintervallen erfasst werden, sodass hieraus die Zeit zwischen zwei Verbrauchswerten und damit die dem Verbrauchsstrom zugeordnete Zeit bekannt ist.

Die Erfindung bezieht sich ferner auf eine Vorrichtung zum Bewerten des Verbrauchs eines Mediums in einem Versorgungssystem für dieses Medium mittels mindestens eines Verbrauchszählers, wobei die Vorrichtung einen Speicher zum Speichern von Verbrauchswerten mindestens des einen Verbrauchszählers und eine an den Speicher angeschlossene Recheneinheit aufweist, welche zur Bewertung des Verbrauchs anhand der erfassten Verbrauchswerte eingerichtet ist. Diese Bewertung wird insbesondere dadurch erreicht, dass die Recheneinheit zur Durchführung des vorbeschriebenen Verfahrens oder Teilen hiervon eingerichtet ist.

Erfindungsgemäß kann die Vorrichtung in einen Verbrauchszähler mit integriert sein. Dies kann bspw. auch ein Hauptzähler sein, in dem die Verbrauchswerte von Unterzählern mit erfasst und gespeichert werden. Verbrauchszähler können gemäß einer bevorzugten Anwendung insbesondere Wasserzähler in einem Gebäude sein, ohne dass das erfindungsgemäß vorgeschlagene Prinzip auf derartige Zähler beschränkt ist. Alternativ oder zusätzlich kann die erfindungsgemäße Vorrichtung auch in einer Datensammelstelle mit integriert sein, an welche mindestens ein Verbrauchszähler, vorzugsweise aber eine Vielzahl von Verbrauchszählern, angeschlossen ist. Der Datensammler kann insbesondere der Datensammler eines Verbrauchserfassungssystems im Rahmen einer Verbrauchskostenerfassung in Liegenschaften sein.

Bei der bereits beschriebenen, besonders bevorzugten Anwendung des Verfahrens bei Wasserzählern oder allgemeinen Fluidzählern kann der Verbrauchsstrom insbesondere durch einen Volumenstrom gebildet sein.

Im Vergleich zum Stand der Technik bietet die vorliegenden Erfindung durch die Auswertung von Häufigkeitsverteilungen von Verbrauchsstromwerten eine wesentlich sicherere Grundlage für das Bewerten des Verbrauchs und das Feststellen eines ungewöhnlichen Verbrauchsverhaltens, bspw. durch eine Leckage oder einen Mediumklau zwischen Hauptzähler und Unterzähler.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

Fig. 1      aus über die Zeit erfassten Verbrauchsmesswerten eines Verbrauchszählers ermittelte Verbrauchsstromwerte (Volumenstrom) für einen ersten Auswertezeitraum;

Fig. 2      die zu dem ersten Auswertezeitraum gehörenden kumulierten Verbrauchsmesswerte (Zählerstand) des Verbrauchszählers;

Fig. 3      aus über die Zeit erfassten Verbrauchsmesswerten des Verbrauchszählers ermittelte Verbrauchsstromwerte (Volumenstrom) für einen zweiten Auswertezeitraum;

Fig. 4      die zu dem zweiten Auswertezeitraum gehörenden kumulierten Verbrauchsmesswerte (Zählerstand) des Verbrauchszählers;

Fig. 5      eine erfindungsgemäß gebildete Häufigkeitsverteilung für die gemäß Fig. 1 ermittelten Verbrauchsstromwerte;

Fig. 6      eine erfindungsgemäß gebildete Häufigkeitsverteilung für die gemäß Fig. 3 ermittelten Verbrauchsstromwerte;

Fig. 7      ein Flussdiagramm einer ersten Ausführungsform des erfindungsgemäßen Verfahrens zum Bewerten des Verbrauchs eines Mediums in einem Versorgungssystem;

Fig. 8      über die Zeit erfasste kumulierte Verbrauchsmesswerte (Zählerstand) von zwei Verbrauchszählern, wobei einer der Verbrauchszähler ein Hauptzähler und der andere Verbrauchszähler ein Unterzähler ist;

Fig. 9      die über die Zeit aus den erfassten Verbrauchsmesswerten ermittelten Verbrauchsstromwerte (Volumenstrom) als Differenz zweier Verbrauchszähler für einen ersten und einen zweiten Fall;

Fig. 10     eine erfindungsgemäß gebildete Häufigkeitsverteilung der Differenz der Verbrauchsstromwerte (Volumenstromintervall) der beiden Verbrauchszähler in dem ersten Fall gemäß Fig. 9;

Fig. 11     eine erfindungsgemäß gebildete Häufigkeitsverteilung der Differenz der Verbrauchsstromwerte (Volumenstromintervall) der beiden Verbrauchszähler in dem zweiten Fall gemäß Fig. 9;

Fig. 12a    eine Zugehörigkeitsfunktion für die relative Anzahl von Einträgen in einer ersten Verbrauchsstromklasse;

Fig. 12b    eine Zugehörigkeitsfunktion für die relative Anzahl von Einträgen in allen übrigen Verbrauchsstromklassen;

Fig. 12c    eine Zugehörigkeitsfunktion zum Zusammenfassen der Zugehörigkeitsfunktionen gemäß Fig. 12a und 12b;

Fig. 12d    eine tabellarische Zusammenstellung für die Zugehörigkeitsfunktion gemäß Fig. 12c und

Fig. 13     schematisch eine zur Durchführung des erfindungsgemäßen Verfahrens gemäß einer weiteren Ausführungsform eingerichtete Vorrichtung.

Nachfolgend werden verschiedene Ausführungsformen des erfindungsgemäßen Verfahrens zum Bewerten des Verbrauchs eines Mediums in einem Versorgungssystem anhand des Beispiels eines Wasserzählers als Verbrauchszähler beschrieben. Das verbrauchte Medium ist in diesem Fall Wasser und die Verbrauchsstromwerte für das Medium sind durch von dem Wasserzähler ermittelte Volumenstromwerte durchströmten Wassers gebildet. Diese Volumenstromwerte werden nachfolgend auch kurz als Volumenstrom bezeichnet.

Die Erfindung ist jedoch nicht auf die in der Figurenbeschreibung beispielhaft erläuterten Wasserzähler und das Wasserversorgungssystem eines Gebäudes beschränkt, sondern wie eingangs erwähnt allgemein für Versorgungssysteme anwendbar, bei denen ein bestimmtes Versorgungsmedium durch einen Versorger zur Verfügung gestellt und mittels Verbrauchszählern abgerechnet wird. Das konkret beschriebene Verfahren stellt aber einen besonders bevorzugten Anwendungsfall des erfindungsgemäß vorgeschlagenen Verfahrens bei der Verbrauchskostenermittlung in Gebäuden, typischerweise in Ein- und Mehrfamilienhäusern oder Bürogebäuden mit mehreren Parteien, dar.

Das im Gebäude verbrauchte Wasser wird durch Wasserzähler erfasst, um das Volumen des verbrauchten Wassers gegenüber dem Wasserversorger und/oder den Entsorgungsbetrieben für die Kanalnutzung abrechnen zu können. Dazu erfassen Wasserzähler genau dann das Volumen in Form eines Volumenstroms, wenn Wasser an einer Verbrauchsstelle abgezapft wird und dadurch durch den Wasserzähler strömt. Im Falle von Mehrfamilienhäusern gilt dies sowohl für einen zentralen Hauswasserzähler als auch für jeden Wohnungszähler, in dessen Überwachungs- bzw. Zählbereich (Wohnung) die Wasserentnahme (Zapfung) stattfindet. Wenn keine Zapfung stattfindet, steht der Wasserzähler still, und es wird kein zusätzliches Volumen als Verbrauchsmesswert aufsummiert. An dem Wert der kumulierten Verbrauchsmesswerte (Zählerstand) des Wasserzählers ändert sich in diesem Fall nichts.

Die Anzahl $N_{zapf-d}$ der Wasserzapfungen pro Tag bewegt sich im Betriebszustand ohne Leckage zwischen Null, wenn keine Zapfung stattgefunden hat, und einer endlichen Zahl, wenn eine bestimmte Anzahl von Zapfungen an diesem Tag stattgefunden hat. Die Dauer $\Delta t_{zapf}$ einer Zapfung kann unterschiedlich sein und hängt von der jeweiligen Anwendung ab. So erfordert Baden oder Duschen längere Zapfzeiten als Händewaschen. Typischerweise beträgt die maximale Dauer $\Delta t_{zapf}$ einer Zapfung bei einer normalen Anwendung im häuslichen Bereich weniger als eine Stunde. Keine Zapfungen treten bspw. bei Wohnungsleerstand oder während des Urlaubs eines Nutzers auf.

Im häuslichen Bereich können typischerweise die folgenden Leckagearten auftreten:

1. Undichtigkeiten im Verteilnetz (Ventile, Rohre, Rohrverbindungen des Versorgungssystems oder Rohrbruch)

Diese Leckageart ist charakterisiert durch einen relativ gleichmäßigen verlustbedingten Volumenstrom, der ggf. durch Volumenstromspitzen bei einer Zapfung überlagert wird. Die Höhe des Volumenstroms kann abhängig von der Undichtigkeit klein bis groß sein. Eine derartige Undichtigkeit liegt typischerweise über einen längeren Zeitraum vor.

2. Nutzerbedingter Wasserverlust

Ein nutzerbedingter Wasserverlust basiert typischerweise auf einem Fehlverhalten eines Nutzers, bspw. wenn ein Wasserhahn nicht richtig abgedreht worden ist. Auch hier ergibt sich typischerweise ein relativ gleichmäßiger verlustbedingter Volumenstrom, der durch Volumenstromspitzen bei einer Zapfung überlagert sein kann. Üblicherweise ist der Volumenstrom bei einem nutzerbedingten Wasserverlust vergleichsweise klein und liegt über einen begrenzten Zeitraum vor, nämlich bis dieser unbeabsichtigte Wasserverlust durch den Nutzer erkannt und abgestellt wird.

3. Wasserklau

Unter Wasserklau wird ein bewusstes Abzweigen von Wasser zur Umgehung von Wasserzählern bezeichnet. Dieses kann bei einem permanenten Abzweigen einen relativ gleichmäßigen verlustbedingten Volumenstrom bedeuten, der durch Volumenstromspitzen bei einer Zapfung überlagert ist. Wasserklau kann auch bei einem Abzweigen durch eine normale nutzerbedingte Zapfung auftreten, wenn diese an dem Wasserzähler vorbei erfolgt. In diesem Fall überlagern sich das "reguläre" Nutzerzapfprofil und das "Wasserklau"-Nutzerzapfprofil. Der Volumenstrom ist abhängig von der Art und dem Zweck der Zapfung.

Hieraus ergibt sich, dass verschiedene Leckagearten unterschiedlichen Volumenstroms auftreten können. Aufgrund des unterschiedlichen Zeitverhaltens und des verschiedenen Volumenstroms je nach Art der Leckage ist es schwierig, in einem Einzelfall durch Vorgabe von Kriterien zu entscheiden, ob eine unerwünschte Leckage oder eine normale Nutzung vorliegt.

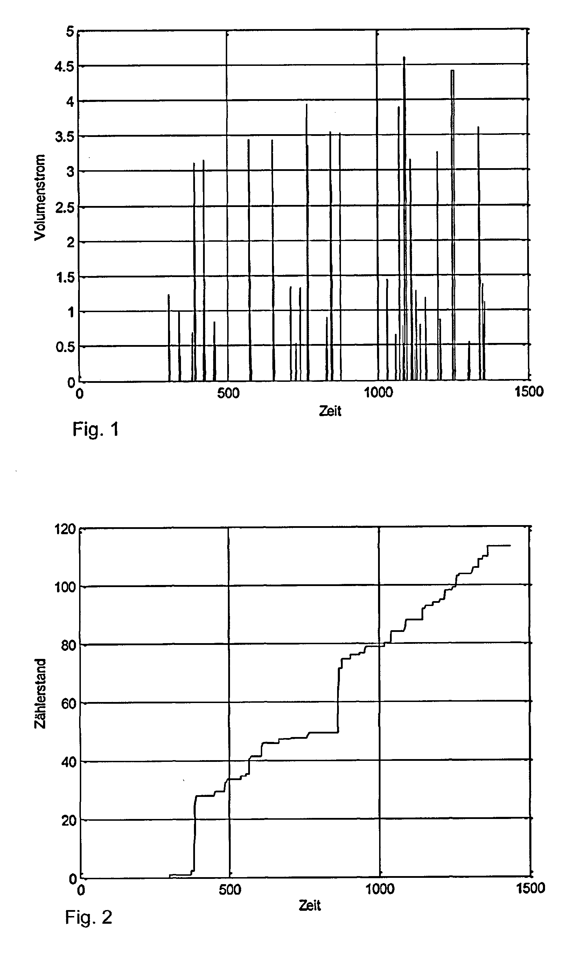

In Fig. 1 ist der über die Zeit durch einen Verbrauchszähler erfasste Volumenstrom in beliebigen Einheiten für einen Auswertezeitraum in beliebigen Einheiten dargestellt. Der Verbrauchsstromwerte darstellende Volumenstrom ist aus einzelnen Verbrauchsmesswerten des Verbrauchszählers in an sich bekannter Weise bestimmt worden. Das in Fig. 1 dargestellte Volumenstromdiagramm zeigt ein gängiges Zapfverhalten durch Wasserentnahmen eines Nutzers aus dem Versorgungssystem, die über die Zeit mehr oder weniger unregelmäßig verteilt sind und sich je nach Nutzungsanlass in der Höhe des Volumenstroms unterscheiden. Die einzelnen Zapfungen sind mit einer durch die Skala der Zeitachse vorgegebenen zeitlichen Auflösung als einzelne Ausschläge in dem Volumenstromdiagramm erkennbar und von längeren Zeiten unterbrochen, in denen keine Zapfung stattfindet, d.h. der Volumenstrom Null ist.

Fig. 2 zeigt über denselben Auswertezeitraum den akkumulierten Zählerstand, d.h. das zeitliche Integral über den Volumenstrom, wie er üblicherweise an einem Wasserzähler abgelesen wird. In dem Zeitverhalten erkennt man treppenartige Absätze, an denen sich der Zählerstand mehr oder weniger stark ändert, gefolgt von flachen, plateauartigen Perioden, in denen keine Zapfung stattfindet. Jede Treppenstufe gibt also eine Zapfung bzw. einen Wasserverbrauch an, wobei die hohen Stufen eine große Wasserentnahme und die niedrigen Stufen eine nur geringe Wasserentnahme zu einem bestimmten Zeitpunkt anzeigen.

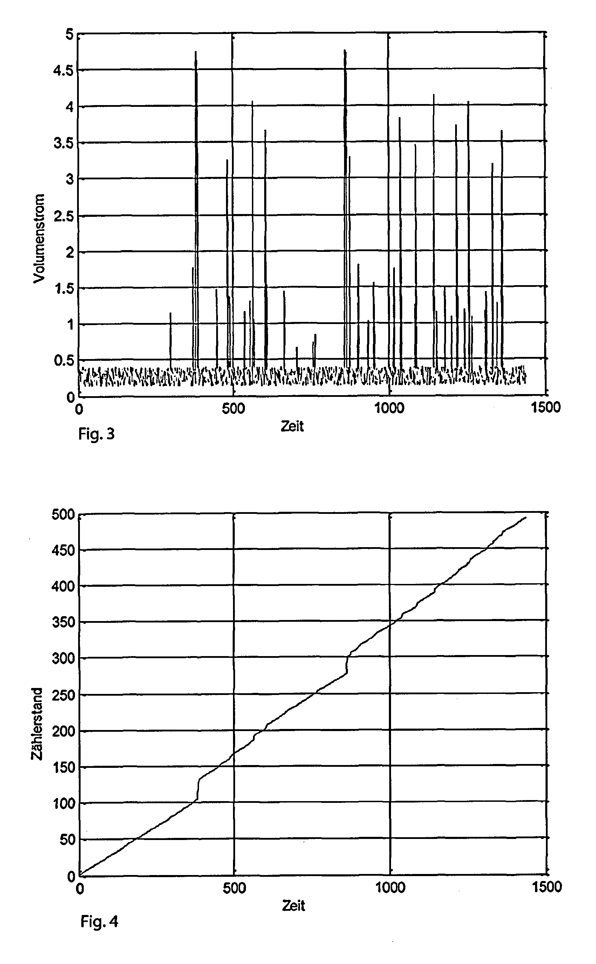

Im Vergleich ist in Fig. 3 ein Volumenstromdiagramm dargestellt, bei dem neben den einzelnen, peakartigen Zapfungen ein Band eines niedrigen Volumenstroms erkennbar ist, das über den gesamten Auswertezeitraum konstant vorliegt. Dies ist durch eine Leckage mit einem kontinuierlichen, niedrigen Volumenstrom bedingt. Das in Fig. 4 dargestellte, zugehörige Zählerstandsdiagramm mit den kumulierten Verbrauchsmesswerten bzw. Volumenströmen des Wasserzählers zeigt einen mehr oder weniger kontinuierlichen Zählerfortschritt, bei dem lediglich stärkere überlagerte Zapfungen durch den Nutzer als Stufen in der sonst zwischen Zeit und Zählerstand gebildeten Gerade erkennbar sind.

Bei diesen zwischen Fig. 2 und Fig. 4 erkennbaren Unterschieden in den Zählerstandsdiagrammen setzt die vorliegende Erfindung an. Zum Bewerten des Wasserverbrauchs in bspw. einem Haus-Versorgungssystem wird mittels eines Wasserzählers aus erfassten Zählerwerten des Verbrauchszählers zeitlich aufgelöst der Volumenstrom für verbrauchtes Wasser ermittelt. Hierzu wird das in Fig. 2 und 4 auch als Zählerstand bezeichnete kumulierte Volumen $V_{kum}$ betrachtet, das sich während einer Zapfung einer bestimmten Dauer $\Delta t_{zapf}$ stetig erhöht.

Durch Bildung der Differenz zweier kumulierter Volumina $\Delta V_{kum}$ zwischen zwei Zählerständen $V_{kum}(n)$ und $V_{kum}(n+1)$ zu den Zeitpunkten t(n) und t(n+1) erhält man den Volumenstrom zwischen den beiden Messzeitpunkten t(n) und t(n+1). Falls zwischen den Zeitpunkten t(n) und t(n+1) eine Zapfung erfolgt ist, ist $\Delta V_{kum}>0$. Ist zwischen diesen beiden Zeitpunkten keine Zapfung erfolgt, ist $\Delta V_{kum} = 0$.

Wird ein Referenz- bzw. Auswertezeitraum von erfindungsgemäß bspw. 24 Stunden betrachtet, ergibt die das kumulierte Volumen beschreibende zeitabhängige Funktion $V_{kum}(t)$ keine stetig steigende Kurve, sondern weist Zeitabschnitte auf, in den der Zählerstand $V_{kum}$ konstant ist. Dies ist in Fig. 2 durch die Plateaubildung der Treppenstufenfunktion deutlich zu erkennen, wobei für die Durchführung des erfindungsgemäßen Verfahrens der akkumulierte Verbrauchswert des Zählers nach Beendigung des auch als Auswertezeitraum bezeichneten Referenzzeitraums auf jeweils Null zurückgesetzt wird. Die Darstellung der Zählerstands-Differenzen als Volumenstrom gemäß Fig. 1 verdeutlicht, dass es in den Zeiten der Plateaubildung gemäß Fig. 2 zu keinen Zapfungen kommt, d.h. ein Volumenstrom von Null vorliegt, sodass sich auch keine Änderung des Zählerstands $V_{kum}$ bzw. der Zählerstandsdifferenz $\Delta V_{kum}$ ergibt.

Für den in Fig. 3 und 4 dargestellten Fall einer Leckage mit einer kontinuierlichen Zapfung niedrigen Volumenstroms, welche durch temporäre Nutzerzapfungen mit höherem Volumenstrom überlagert ist, zeigt der Zählerstand in der Grundfunktion eine stetig steigende Kurve, die bei auftretenden Nutzerzapfungen im Sinne einer Treppenfunktion versetzt ist, ohne dass es zu einer Plateaubildung kommt. Über den gesamten Referenz- bzw. Auswertezeitraum ist die Differenz kumulierter Volumina an aufeinander folgenden Zeitpunkten daher > 0.

Um dieses Verhalten einfach feststellen und unterscheiden zu können, schlägt die vorliegende Erfindung vor, aus den Verbrauchsstromwerten (Volumenstromwerten) eine Häufigkeitsverteilung zu bilden und den Verbrauch durch eine Auswertung dieser gebildeten Häufigkeitsverteilungen zu bewerten.

Gemäß der hier konkret beschriebenen Ausführungsform können dazu die das kumulierte Volumen wiedergebenden Zählerstände $V_{kum}$ regelmäßig, bspw. in einem Zeitabstand von einer Minute, abgetastet werden. Hieraus kann der mittlere Volumenstrom $V(n)$ aus der Differenz kumulierter Volumina $\Delta V_{kum}$ zu zwei aufeinander folgenden Zeitpunkten t(n-1) und t(n) berechnet werden als

$$\dot{V}(n) = \frac{\Delta V_{kum}(n)}{\Delta t(n)} = \frac{V_{kum}(n) - V_{kum}(n-1)}{t(n) - t(n-1)}.$$

Die so gebildeten Verbrauchsstrom- bzw. Volumenstromwerte werden nun zu einer Häufigkeitsverteilung zusammengefasst. Dazu können die Verbrauchsstrom- bzw. Volumenstromwerte zur Bildung der Häufigkeitsverteilung Verbrauchsstromklassen $K_i$ zugeordnet und jeweils die Häufigkeit des Vorkommens von Verbrauchsstromwerten als Einträge in einer Verbrauchsstromklasse $K_i$ gezählt werden. Die Verbrauchsstromklassen $K_i$ können durch vorgegebene Grenzwerte definiert sein, wobei die Grenzwerte ggf. einstellbar sind. Sinnvolle Volumenstromklassen können bspw. vorgegeben sein als

$$K_1: \ 0 \leq \dot{V} < \dot{V}_{grenz1} \, ,$$

$$K_2: \dot{V}_{grenz1} \leq \dot{V} < \dot{V}_{grenz2}$$

und

$$K_3: \dot{V}_{grenz2} \leq \dot{V} < \dot{V}_{grenz3},$$

wobei die Anzahl der Klassen durch die Definition entsprechender Grenzwerte $\dot{V}_{grenzi}$ beliebig anpassbar ist.

Im einfachsten Fall werden nur zwei Volumenstromklassen $K_i$ gebildet, wobei $\dot{V}g_{renz1}$ dem Anlaufvolumenstrom des Wasserzählers entsprechen kann. Der Anlaufvolumenstrom eines Wasserzählers ist definiert als der Volumenstrom, bei dem der Wasserzähler einen Zählfortschritt zuverlässig feststellen kann.

Unterhalb des Anlaufvolumenstroms wird eine Zapfung nicht erfasst und der Zähler nicht weitergezählt. Bspw. liegt der Anlaufvolumenstrom eines Wasserzählers der genormten Geräteklasse C bei ca. 5 l/h. Für eine detaillierte Analyse werden dann entsprechend der gewünschten Genauigkeit weitere Volumenstromklassen $K_i$ definiert, wobei zumindest eine zweite Volumenstromklasse $K_2$ einen oberhalb des Anlaufvolumenstroms $\dot{V}_{grenz1}$ liegenden Volumenstrom, d.h. eine Zapfung, bedeutet.

Für das Bilden der Häufigkeitsverteilung wird dann jeweils die Anzahl der Volumenstromwerte V in einer Verbrauchs- bzw. Volumenstromklasse $K_i$ bestimmt. Eine Häufigkeitsverteilung wird über einen vorgegebenen bzw. vorgebbaren Auswertezeitraum, bspw. 6 Stunden, 12 Stunden oder 24 Stunden, gebildet und nach Ablauf des Auswertezeitraums jeweils neu gebildet, um Veränderungen feststellen zu können. Ältere Auswertezeiträume können zum Rückgriff und für einen späteren Vergleich gespeichert und archiviert werden.

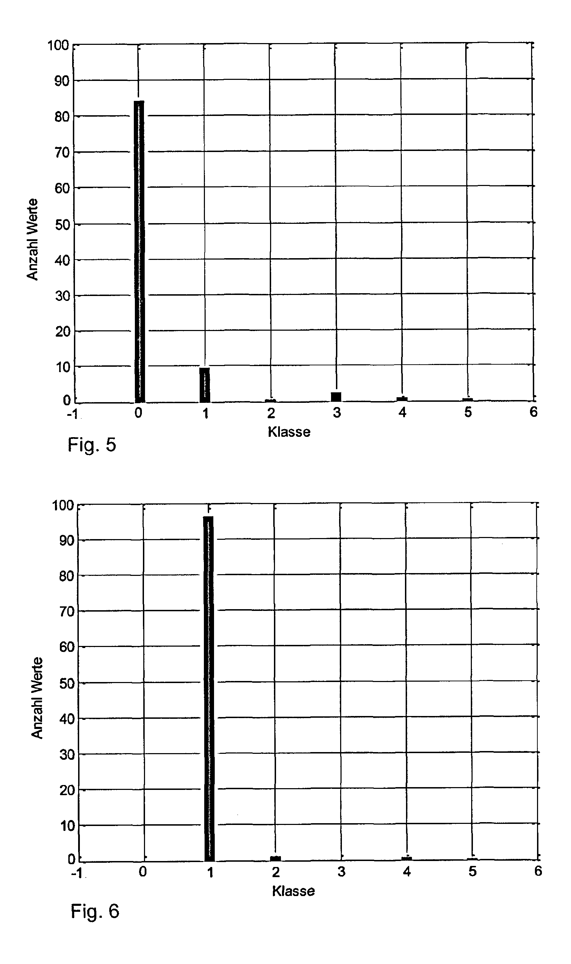

Für das Zählerstandsdiagramm gemäß Fig. 2 und das gehörige Volumenstromdiagramm gemäß Fig.1 ist eine erfindungsgemäße Häufigkeitsverteilung in Fig. 5 dargestellt. Es wurden in diesem Beispiel insgesamt sechs Verbrauchsstromklassen $K_i$ gebildet. Die dargestellte Anzahl der Werte in der über den Auswertezeitraum gebildeten Häufigkeitsverteilung ist prozentual, d.h. die Gesamtanzahl der Werte entspricht 100.

Es zeigt sich, dass die weitaus größte Anzahl von Volumenstromwerten in der ersten Klasse $K_1$ liegt, welche in dem Diagramm die Ordnungsnummer "0" aufweist. In dieser Klasse liegt der Volumenstromwert unter dem Anlaufvolumenstrom des Wasserzählers, d.h. es findet in dieser Klasse keine Wasserentnahme bzw. Zapfung statt. In den weiteren Klassen $K_i$ mit den Ordnungsnummern "1" bis "5" liegen relativ zu der ersten Volumenstromklasse $K_1$ vergleichsweise wenige Volumenstromwerte, welche einzelne Zapfungen unterschiedlicher Zapfintensität (d.h. unterschiedlichen Volumenstroms) wiederspiegeln.

In Fig. 6 ist die auf identische Weise gebildete Häufigkeitsverteilung für das Zählerstandsdiagramm gemäß Fig. 4 und das Volumenstromdiagramm gemäß Fig. 3 gebildet. Es zeigt sich, dass in der Volumenstromklasse $K_1$ mit der Ordnungsnummer "0" bis zu dem Anlaufvolumenstrom $\dot{V}g_{renz1}$ keine Volumenstromwerte zu finden sind. Die Anzahl der Werte ist also Null. Dies liegt daran, dass eine kontinuierliche Leckage oberhalb des Anlaufvolumenstroms $\dot{V}g_{renz1}$ vorliegt. Die Werte für diesen Leckage-Volumenstrom liegen in der Volumenstromklasse $K_2$, welche der Ordnungszahl "1" in dem Diagramm gemäß Fig. 6 entspricht. Die Anzahl der Einträge dieser Volumenstromklasse $K_2$ beträgt nahezu 100 %, da die kontinuierliche Wasserentnahme zu jedem Zeitpunkt vorliegt und nur durch gelegentliche Nutzerzapfungen überlagert wird, die sich dann in den weiteren Klassen $K_i$ finden.

Eine mögliche Auswertung dieser Häufigkeitsdiagramme kann gemäß einer Ausführungsform des erfindungsgemäßen Verfahrens nach Ablauf des Auswertezeitraums wie folgt erfolgen:

Zunächst wird die Verbrauchsstromklasse $K_i$ mit der höchsten Werteanzahl, d.h. den meisten Einträgen der Häufigkeitsverteilung, ermittelt. Liegen mehr als $N_{grenz1}$ (absolut) bzw. ngrenzl (relativ) Volumenstromwerte Y in der Klasse $K_i$, welche die Verbrauchsstromklasse $K_1$ bis zu dem Anlaufvolumenstrom $\dot{V}g_{renz1}$ des Wasserzählers bildet, liegt sicher keine kontinuierliche Leckage vor, weil im Falle einer kontinuierlichen Leckage in dieser einen Zählerstillstand anzeigenden Verbrauchstromklasse keine Werte zu finden sind. Entsprechend kann auf eine kontinuierliche Leckage geschlossen werden, wenn weniger als $Ng_{renz1}$ (absolut) bzw. $n_{grenz1}$ (relativ) Volumenstromwerte in der Verbrauchsstromklasse $K_1$ liegen.

Auch wenn grundsätzlich eine Auswertung sowohl mit Absolutwerten als auch mit Relativwerten bezüglich der Anzahl von Einträgen in einer Verbrauchsstromklasse $K_i$ möglich ist, bietet sich eine relative Auswertung bezogen auf die Anzahl der Gesamteinträge in der Häufigkeitsverteilung an. Diese kann ggf. durch eine zusätzliche absolute Anzahlgrenze ergänzt werden.

Eine detailliertere Auswertung setzt eine entsprechend größere Anzahl von Verbrauchsstromklassen $K_i$ voraus. Auch in diesem Fall wird die Klasse mit der höchsten Werteanzahl bestimmt, die im Falle einer vorliegenden Leckage eine Aussage über die Höhe des Leckagestroms im Rahmen der Klassengrenzen ermöglicht.

In diesem Fall ist es auch sinnvoll, den absoluten oder relativen Abstand der Verbrauchsstromklasse $K_i$ mit der größten Anzahl zu der Verbrauchsstromklasse $K_j$ mit der zweit- oder drittgrößten Werteanzahl zu bestimmten. Daraus lässt sich eine Aussage über die Konstanz des Leckagestroms, insbesondere des Leckagevolumenstroms im Falle von Wasser oder eines Fluids, ableiten. Ist der Abstand groß, so liegt der Leckagestrom innerhalb der entsprechenden Klasse. Ist der Abstand zwischen diesen Klassen gering, dann streut der Leckagestrom stärker.

Es findet zur Auswertung der Häufigkeitsverteilung also insbesondere ein Vergleich der Anzahl von Verbrauchsstromwerten mit vorgegebenen Schwellenwerten und/oder mit der Anzahl mindestens eines anderen Verbrauchsstromwertes statt, wobei der Vergleich der Verbrauchsstromwerte durch die Anzahl von Einträgen in der jeweiligen Verbrauchsstromklasse erfolgen kann.

In einer weiteren Ausführungsform des erfindungsgemäßen Verfahrens kann eine Lernphase vorgesehen werden, in welcher als eine typische Häufigkeitsverteilung eine Referenz-Häufigkeitsverteilung gebildet wird. Diese kann zur Auswertung der Häufigkeitsverteilung mit der aktuellen Häufigkeitsverteilung verglichen werden. Eine Referenz-Häufigkeitsverteilung kann bspw. dadurch gelernt werden, dass die ermittelten Verbrauchsstromwerte einer Referenz-Häufigkeitsverteilung hinzugefügt werden. Es wird also auch in diesem Fall zunächst eine Häufigkeitsverteilung über einen Auswertezeitraum ermittelt. Ist die ermittelte Häufigkeitsverteilung die erste Häufigkeitsverteilung der Lernphase, werden die ermittelten Häufigkeiten der einzelnen Klassen $K_i$ als Referenzwerte abgespeichert.

Handelt es sich nicht um die erste in der Lernphase ermittelte Häufigkeitsverteilung, werden die Häufigkeitswerte der einzelnen Klassen $K_i$ nach der folgenden Gewichtung ermittelt:

$$h_{ref,i}(n) = a \cdot h_{ref,i}(n-1) + (1-a) \cdot h_{akt,i}(n)$$

mit $h_{ref,i}(n)$ als relative Häufigkeit der Referenzklasse $K_i$ zum Zeitpunkt t(n), $h_{ref,i}(n-1)$ als relativen Häufigkeit der Referenzklasse $K_i$ zum Zeitpunkt t(n-1), $h_{akt,i}(n)$ als der relativen Häufigkeit der aktuellen Verbrauchsstromklasse $K_i$ zum Zeitpunkt t(n) und a als Parameter zur Festlegung der Adaptionsgeschwindigkeit.

Hierdurch kann während Lernphasen, in denen bekannt ist, dass keine Leckage vorliegt, eine Adaption der Auswertung des Verbrauchs an das tatsächliche Nutzerverhalten erfolgen, wobei durch den Parameter a die Adaptionsgeschwindigkeit, d.h. die Geschwindigkeit bei Berücksichtigung von Änderungen in dem Nutzerverhalten, individuell berücksichtigt werden kann.

Nach Abschluss der Lernphase kann die aktuelle Häufigkeitsverteilung eines Auswertezeitraums dann mit der Referenz-Häufigkeitsverteilung verglichen werden. Weicht dabei die Häufigkeit von Verbrauchsstromwerten für eine bestimmte Verbrauchsstromklasse $K_i$ um mehr als einen parametrierbaren, absoluten und/oder relativen Betrag von dem Wert der entsprechenden Referenzklasse $K_i$ aus der Referenz-Häufigkeitsverteilung ab, so kann auf ein anormales Verhalten und ggf. eine Leckage geschlossen werden.

Typischerweise kann eine Lernphase nach der Inbetriebnahme oder auch während jeder Betriebsphase gestartet werden, z.B. nach einem Mieterwechsel oder geänderten Nutzungsgewohnheiten.

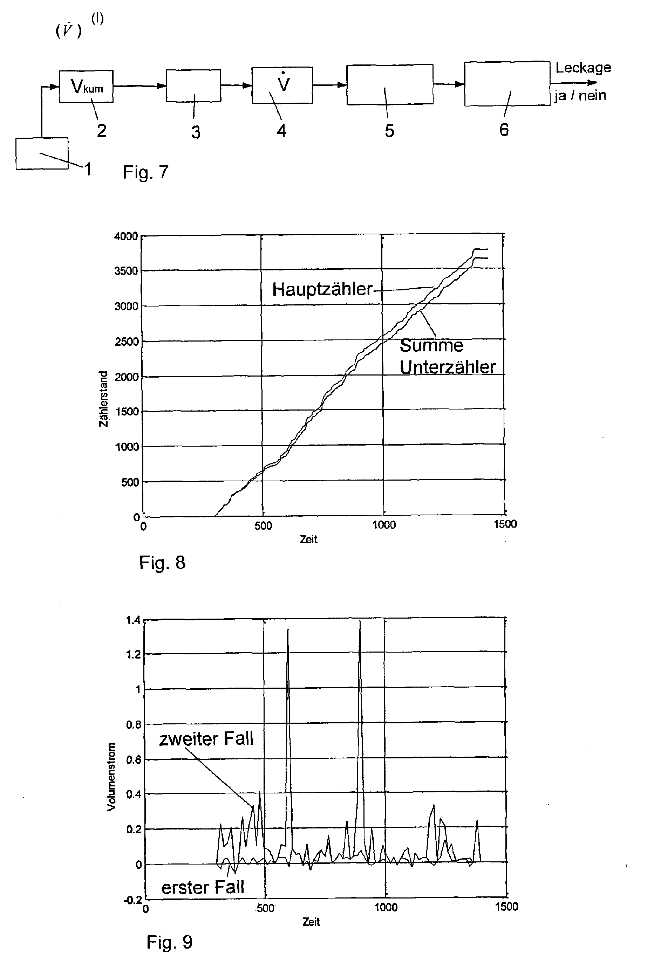

Fig. 7 stellt ein Flussdiagramm einer ersten Ausführungsform des erfindungsgemäßen Verfahrens dar. Durch einen in diesem Beispiel als Wasserzähler ausgebildeten Verbrauchszähler 1, bspw. ein Flügelradzähler, werden Zählimpulse auf ein dem Verbrauchszähler 1 zugeordnetes Zählwerke 2 gegeben, in welchem der Zählerstand als akkumulierte Verbrauchsmesswerte $V_{kum}$ gebildet werden und digital abrufbar sind.

Im Rahmen einer regelmäßig in vorgegebenen zeitlichen Abständen erfolgenden Abtastung 3 des Zählwerks 2 findet in einem nicht dargestellten Rechenwerk, bspw. einem Mikroprozessor, eine Berechnung 4 eines Verbrauchsstroms (Verbrauchsstromwert $\dot{V}$) statt. Diese Verbrauchs- bzw. Volumenstromwerte V werden dann in einer Häufigkeitsverteilung 5 einsortiert, in welcher die Anzahl der einzelnen Verbrauchsstromwerte $\dot{V}$ bezogen auf Verbrauchsstromwertklassen bzw. -intervalle $K_i$ ermittelt wird. Anschließend findet durch eine in der Recheneinheit implementierte Auswertung 6 eine Bewertung der Häufigkeitsverteilung entsprechend den vorbeschriebenen Grundsätzen statt, wobei als Ergebnis eine Auswertemitteilung "Leckage ja/nein" erfolgt, die ggf. durch eine nicht dargestellte Zentrale ausgewertet und angezeigt werden kann.

Gemäß einer weiteren Ausführungsform, die erfindungsgemäß mit der vorbeschriebenen Ausführungsform zur Leckageerkennung mit einem kontinuierlichen Durchfluss in einem Wasserzähler auch miniert werden kann, dient dem Erkennen von Zapfverlusten zwischen einem Hauptzähler und einem oder mehreren Unterzählern. Hierbei handelt es sich um Zapfverluste, die dadurch entstehen werden, dass eine Zapfung von Wasser bzw. Medium in einem Hauptzähler noch erfasst, durch die Summe der Unterzähler aber nicht mehr abgebildet wird.

Zum Erkennen solcher Verluste wird ähnlich zu der vorbeschriebenen Auswertung ein Verbrauchsstromwert gebildet, wobei der bei dieser Verfahrensvariante gebildete Verbrauchsstromwert aus der Differenz der Verbrauchsstromwerte zweier Verbrauchszähler gebildet wird. Einer der Verbrauchszähler ist in dem beschriebenen Beispiel der Hauptwasserzähler und der andere der Verbrauchszähler ein Unterwasserzähler bspw. einer Wohnung, eine Gruppe von Unterwasserzählern bspw. sämtlicher Wohnungen in einem Gebäude, wobei die Zählerwerte der Unterwasserzähler aufsummiert und als ein Zählerwert behandelt werden können.

Konkret kann zur Analyse zunächst die Differenz zwischen dem Zählerstand des Hauptwasserzählers und der Summe der Unterwasserzähler gebildet werden. Diese Zählerstände sind über einen bestimmten Auswertezeitraum in Fig. 8 dargestellt, wobei eine Kurve "Hauptzähler" den Zählerstand des Hauptwasserzählers und die andere Kurve "Summe Unterzähler" die Summe der Zählerstände der Unterwasserzähler darstellt.

Die Differenz kann durch die nachfolgend wiedergegebene Formel gefasst werden

$$\Delta V_{Haupt\_Sub}(n) = V_{kum,Haupt}(n) - \sum_{i=1}^{k} V_{kum,Sub,i}(n) \, ,$$

wobei $V_{kum,Haupt}(n)$ den kumulierten Zählerstand des Hauptzählers zum Abtastzeitpunkt $t(n)$, $V_{kum,Sub,i}(n)$ den kumulierten Zählerstand des Unterzählers i zum Abtastzeitpunkt $t(n)$ und k die Anzahl der Unterzähler sind.

Analog zu dem bei der vorbeschriebenen Ausführungsform Vorgehen wird aus dem wie zuvor erläutert gebildeten Differenzsignal $\Delta V_{Haupt\_Sub}(n)$ ein Volumenstromwert $\dot{V}_{Haupt\_Sub}$ gebildet:

$$\dot{V}_{Haupt\_Sub}(n) = \frac{\Delta V_{Haupt\_Sub}(n)}{\Delta t(n)} = \frac{V_{Haupt\_Sub}(n) - V_{Haupt\_Sub}(n-1)}{t(n) - t(n-1)} \, .$$

Die mit dieser Rechenvorschrift erhaltenen Volumenstromwerte (bzw. allgemeiner Verbrauchsstromwerte) sind für zwei verschiedene Fälle in Fig. 9 über die Zeit dargestellt.

In einem ersten Fall schwankt der Volumenstrom bzw. die Volumenstromdifferenz zwischen dem Hauptzähler und der Summe der Unterzähler in einem Bereich um 0. Dies liegt daran, dass die Summe der Unterzählerstände aufgrund von Fehlertoleranzen der einzelnen Wasserzähler nicht exakt mit dem Zählerstand des Hauptzählers übereinstimmt. Je nach Höhe der Fehler und der Vorzeichen können die Zählerstände des Hauptzählers und die Summe der Zählerstände der Unterzähler also unterschiedlich stark voneinander abweichen. Diese Abweichung zeigt sich bei der Berechnung des Volumenstromwerts aus den Zählerständen von Haupt- und Unterzählern auch in einer Volumenstromdifferenz zwischen dem Hauptzähler und der Summe der Unterzähler. Diese toleranzbedingten Schwankungen stellen jedoch noch keine Leckage bzw. keinen Wasserklau dar. Diese Situation entspricht in Fig. 9 der Kurve für den ersten Fall.

Wird die Volumenstromdifferenz dagegen zu bestimmten Zeiten größer, d.h. lässt sich eine signifikante Abweichung des Volumenstroms zwischen dem Hauptzähler und dem Volumenstrom aus der Summe der Unterzähler feststellen, deutet dies auf eine Leckage bzw. einen Wasserklau in dem dem Hauptzähler nachgeordneten Verteilsystem hin. Sofern hierbei einzelne unerlaubte Zapfungen stattfinden, folgt die Volumenstromdifferenz aus Hauptzähler und der Summe der Unterzähler der in Fig. 9 als zweiter Fall dargestellten Kurve.

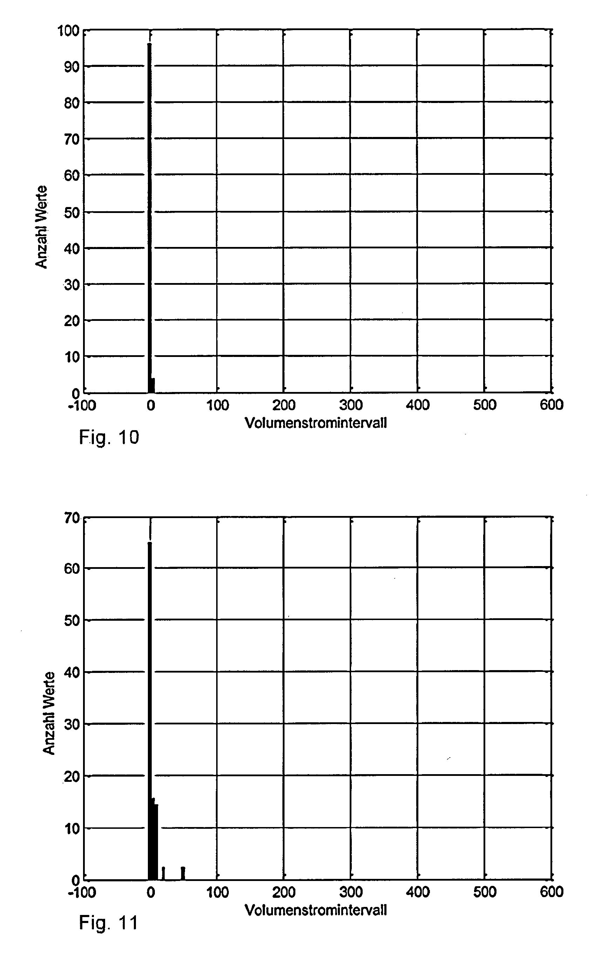

Die aus Fig. 9 für den ersten Fall gewonnene Häufigkeitsverteilung ist in Histogrammform in Fig. 10 dargestellt, wobei für die Volumenstromintervalle respektive Volumenstromklassen beliebige Einheiten gewählt sind. Aufgrund der beschriebenen Fehlertoleranzen sind auch hier nicht alle Volumenstromwerte (Verbrauchsstromwerte) in dem um Null liegenden Volumenstromintervall einsortiert. Es findet sich auch eine gewisse Anzahl von Werten in einem von Null verschiedenen Volumenstromintervall. Der prozentuale Anteil dieser Werte liegt jedoch bei unter 5 %.

Fig. 11 zeigt eine entsprechend gebildete Häufigkeitsverteilung für den zweiten Fall aus Fig. 9. Hier finden sich die meisten Einträge der Volumenstromwerte auch in dem Volumenstromintervall um Null. Die Anzahl dieser Werte liegt jedoch bei nur etwa 65 %. Die übrigen Werte verteilen sich auf höhere Volumenstromintervalle.

Anstelle der hier dargestellten Volumenstromintervalle wäre es grundsätzlich auch möglich, Volumenstromklassen entsprechend der Definition in den Fig. 5 und 6 mit jeweils geeignet definierten Klassengrenzen zu wählen.

Eine Auswertung der Häufigkeitsverteilungen gemäß Fig. 10 und 11 kann bspw. nach folgenden Regeln erfolgen. Ein Wasserklau im Sinne einer unerlaubten, temporären Abzweigung (Zapfung) in dem Versorgungssystem zwischen dem Hauptzähler und den Unterzählern liegt vor, wenn die relative Anzahl der Werte in dem kleinsten Volumenstromintervall respektive der kleinsten Volumenstromklasse kleiner ist als ein vorgegebener Grenzwert und die Anzahl der Werte in den übrigen Volumenstromintervallen respektive den übrigen Volumenstromklassen größer als ein vorgegebener Grenzwert ist. Hierbei kann auch nach den weiteren Volumenstromintervallen noch differenziert werden. Die Grenzwerte sind vorzugsweise aufgrund entsprechender Erfahrungswerte festzulegen, wobei bei der Festlegung die typischerweise zu erwartende und von der Geräteklasse der verwendeten Wasserzähler abhängige Differenz zwischen dem Zählerstand des Hauptzählers und dem Zählerstand der Summe der Unterzähler zu berücksichtigen ist.

Die entsprechenden Grenzwerte können bspw. bei der Inbetriebnahme parametriert werden. Alternativ ist auch hier ein selbstlernendes Verfahren denkbar, bei dem nach dem Start des Lernverfahrens über eine bestimmte Anzahl von Auswertezeiträumen jeweils die Häufigkeitsverteilungen ermittelt werden. Nach dem Berechnen der Häufigkeitsverteilung werden die relative Anzahl der Werte in der kleinsten Volumenstromklasse bzw. dem kleinsten Volumenstromintervall sowie das Volumenstromintervall bzw. die Volumenstromklasse identifiziert, in welcher noch eine relative Anzahl von Werten größer 0 % enthalten ist. Für alle verbleibenden Klassen ist die relative Anzahl von Werten dann gleich 0. Nach Abschluss der Lernphase kann aus allen Werten der einzelnen Auswertephasen der arithmetische Mittelwert gebildet werden. Diese Werte sind dann als entsprechende Grenzwerte zu verwenden. Die Voraussetzung für eine erfolgreiche Lernphase ist, dass in der Lernphase kein Wasserklau auftritt. Dies ist zumindest bei einer Lernphase unmittelbar nach Installation der Wasserzähler nicht zu erwarten.

Eine weitere, alternative oder zusätzliche Möglichkeit zur Auswertung der Häufigkeitsverteilung lässt sich mit Hilfe von Zugehörigkeitsfunktionen verwirklichen. Dazu wird die relative Anzahl von Verbrauchsstromwerten bzw. Volumenstromwerten mit einer diesen Verbrauchsstromwert zugeordneten Zugehörigkeitsfunktion bewertet und die Bewertungen der Zugehörigkeitsfunktionen verschiedener Verbrauchsstrom- bzw. Volumenstromwerte zu einer Bewertung des Verbrauchs insgesamt zusammengefasst. Diese Zugehörigkeitsfunktionen können insbesondere Auswerteregeln einer Fuzzy-Logik sein.

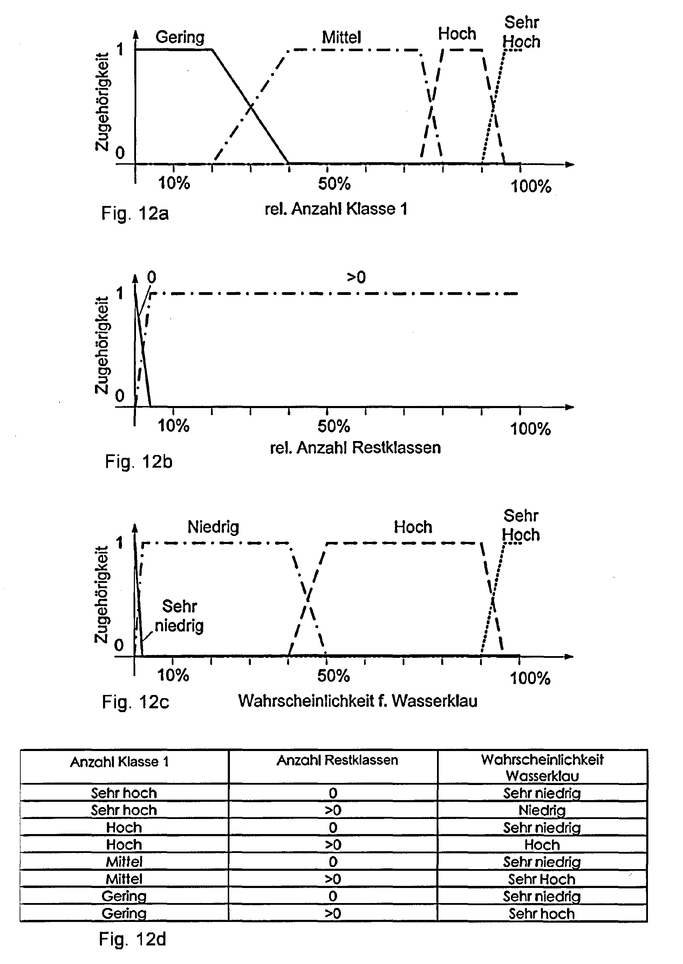

Für die zweite Ausführungsform sind nachfolgend in den Fig. 12a bis Fig.12d geeignete Zugehörigkeitsfunktionen bzw. Auswerteregeln dargestellt. Es wird darauf hingewiesen, dass die Erfindung jedoch nicht darauf beschränkt ist, diese oder ähnliche Auswerteregeln nur bei der Bewertung einer Verbrauchsstromdifferenz zwischen einem Hauptzähler und der Summe der Unterzähler zu verwenden. Eine entsprechende Auswertung mit Hilfe von Zugehörigkeitsfunktionen und/oder anderen Auswerteregeln kann auch für den erstbeschriebenen Fall der Auswertung bei einem einzelnen Zähler erreicht werden.

Die Zugehörigkeitsfunktion in Fig. 12a zeigt eine Bewertung der Anzahl der Volumenstromwerte in der ersten Klasse bzw. dem ersten Volumenstromintervall und führt eine Bewertung der Fuzzy-Variablen "relative Anzahl in niedrigster Klasse" durch. Bei einer relativen Anzahl von über 90 % bis zu 100 % wird die relative Anzahl in Klasse 1 mit sehr hoch bewertet. Für andere relative Anzahlen in der niedrigsten Klasse bzw. dem niedrigsten Volumenstromintervall finden sich dann entsprechend den eingezeichneten Funktionen die Werte hoch, mittel und gering, wobei einer Zugehörigkeit konkret Wertezahlen zwischen 0 und 1 zugewiesen werden.

Fig. 12b bewertet die relative Anzahl in den Restklassen bzw. den restlichen Volumenstromintervallen. Hier findet sich als Fuzzy-Variable "relative Anzahl in Restklassen" der Wert 0, wenn in den Restklassen keine bzw. maximal 5 % der Einträge vorhanden sind. Ab 5 % der Einträge erhält die Zugehörigkeitsfunktion den Wert >0.

Aus diesen beiden Werten kann die Wahrscheinlichkeit für einen Wasserklau abgeleitet werden, die dann entsprechend der ermittelten Prozentzahl von sehr niedrig über niedrig, hoch zu sehr hoch bewertet wird.

Das Bilden dieser Zugehörigkeitsfunktion wird entsprechend der Tabelle in Fig. 12d vorgenommen, in denen die Fuzzy-Variablen "relative Anzahl in Klasse niedrigster Klasse" und "relative Anzahl in Restklassen" bewertet und zu einer Wahrscheinlichkeit für den Wasserklau zusammengefasst werden.

Die Klasse 1 (niedrigste Klasse) und die Restklassen sind durch eine geeignete Wahl von Grenzwerten dabei vorzugsweise so zu wählen, dass Volumenstromwerte, die den Restklassen zugeordnet werden, einer illegalen Wasserentnahme entsprechen und nicht in der toleranzbedingten Abweichung zwischen Hauptzählerstand und der Summe der Unterzählerstände begründet sind.

Das hier dargestellte Beispiel von Zugehörigkeitsfunktionen geht von einer Zusammenfassung sämtlicher Restklassen aus. Es wäre in einer anderen Ausführungsform der Erfindung jedoch auch denkbar, verschiedene Zugehörigkeitsfunktionen für mehrere Fuzzy-Variablen unterschiedlicher Restklassen durchzuführen und eine entsprechende Erweiterung der Regelbasis zu definieren, um eine feinere Abstufung in der Bewertung zu ermöglichen. Dabei können auch zusätzliche Fuzzy-Variablen eingeführt werden, bspw. für die relative Anzahl von Werten in weiteren Durchflussklassen bzw. Durchflussvolumenstromintervallen. Auch hierdurch ließe sich eine feinere Abstufung der Bewertung erreichen.

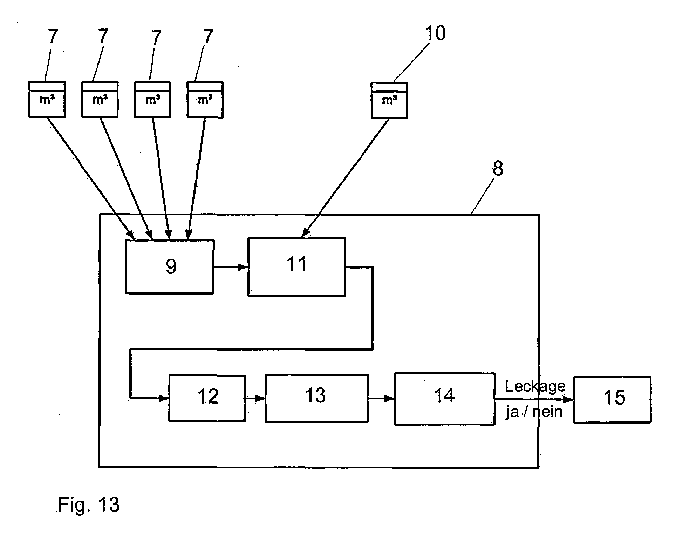

Fig. 13 zeigt ein erfindungsgemäßes System zur Erkennung von Zapfverlusten bzw. Wasserklau zwischen einem Hauptzähler und einer Vielzahl von Unterzählern. Hauptzähler und Unterzähler können bspw. Wasserzähler sein.

Konkret ist eine Vielzahl von Unterzählern 7 dargestellt, welche jeweils den kumulierten Volumenstrom eines Unterzählers 7 bilden. Diese melden ihre Zählerstände an eine separate als Datenempfänger ausgebildete Datensammelstelle 8 mit einer Recheneinheit. In einer Summenbildung 9 der Datensammelstelle 8 werden die Einzelzählerstände der Unterzähler 7 zu einem Gesamtwert summiert. Ferner ist ein Hauptzähler 10 als Verbrauchszähler dargestellt, der seinen kumulierten Zählerstand auch der Datensammelstelle 8 übermittelt, welche in einer Differenzbildung 11 die Differenz zwischen dem Hauptzählerstand und der Summe der Unterzählerstände bildet. Aus dieser Differenz werden in der Berechnung 12 Volumenstromwerte bzw. Verbrauchsstromwerte berechnet und hieraus eine Häufigkeitsverteilung 13 ermittelt. Anschließend findet eine Auswertung 14 der Häufigkeitsverteilung 13 statt mit dem Ergebnis, dass eine Leckage vorliegt oder nicht. Dieses Ergebnis kann die Datensammelstelle 8 an eine Leitstelle 15 weiterleiten, welche im Falle einer Leckage eine entsprechende Information bspw. an den Mieter oder Vermieter einer Liegenschaft aussendet.

Durch die erfindungsgemäße Auswertung von Häufigkeitsverteilungen einzelner Verbrauchsstromwerte kann erfindungsgemäß eine bessere Vorhersage getroffen werden, ob eine Leckage in dem Versorgungssystem vorliegt und Medium austritt oder entwendet wird.

**Bezugszeichenliste und Formelsymbole:**

| 1 | Verbrauchszähler, Wasserzähler |
|---|---|
| 2 | Zählwerk |
| 3 | Abtastung |
| 4 | Berechnung eines Verbrauchsstromwertes |
| 5 | Häufigkeitsverteilung |
| 6 | Auswertung |
| 7 | Unterzähler |
| 8 | Datensammelstelle |
| 9 | Summenbildung der Unterzählerstände |
| 10 | Hauptzähler |
| 11 | Differenzbildung der Unterzählerstände zum Hauptzählerstand |
| 12 | Volumenstromberechnung |
| 13 | Häufigkeitsverteilung |
| 14 | Auswertung |
| 15 | Leitstelle |

| $N_{zapf\_d}$ | Anzahl der Zapfungen pro Tag |
|---|---|
| $\Delta t_{zapf}$ | Dauer der Zapfung |
| $V_{kum}$ | kumulierte Volumen, Zählerstand |
| $\Delta V_{kum}$ | Differenz kumulierter Volumina |
| $\dot{V}$ | mittlerer Volumenstrom bzw. Verbrauchsstrom |
| $K_i$ | Verbrauchsstromklassen |

**Patentansprüche**

1. Verfahren zum Bewerten des Verbrauchs eines Mediums in einem Versorgungssystem mittels mindestens eines Verbrauchszählers (1, 7, 10), bei dem aus über die Zeit erfassten Verbrauchsmesswerten ($V_{kum}$) des Verbrauchszählers (1, 7, 10) Verbrauchsstromwerte ($\dot{V}$) für das Medium ermittelt werden, wobei aus den Verbrauchsstromwerten ($\dot{V}$) eine Häufigkeitsverteilung (5, 13) gebildet wird indem die Verbrauchsstromwerte zur Bildung der Häufigkeitsverteilung (5, 13) in durch vorgebbare Grenzwerte definierte Verbrauchsstromklassen ($K_i$) eingeordnet und jeweils die Häufigkeit des Vorkommens von Verbrauchsstromwerten ($\dot{V}$) als Einträge in einer Verbrauchsstromklasse ($K_i$) gezählt werden und wobei der Verbrauch durch eine Auswertung der Häufigkeitsverteilung (5, 13) bewertet wird, **dadurch gekennzeichnet, dass** zur Auswertung der Häufigkeitsverteilung (5, 13) für das Erkennen einer Leckage des Mediums die Anzahl von Verbrauchsstromwerten ($\dot{V}$) innerhalb von Verbrauchsstromklassen mit der Anzahl von Verbrauchsstromwerten ($\dot{V}$) innerhalb mindestens einer anderen Verbrauchsstromklasse verglichen wird.

2. Verfahren nach einem der vorhergehenden Ansprüche, **dadurch gekennzeichnet, dass** die Häufigkeitsverteilung (5, 13) über einen vorgebbaren Auswertezeitraum gebildet wird.

3. Verfahren nach einem der vorhergehenden Ansprüche, **dadurch gekennzeichnet, dass** zur Auswertung der Häufigkeitsverteilung (5, 13) die Anzahl von Verbrauchsstromwerten ($\dot{V}$) mit vorgebbaren Schwellenwerten verglichen wird.

4. Verfahren nach Anspruch 3, **dadurch gekennzeichnet, dass** die Schwellenwerte gelernt werden.

5. Verfahren nach einem der vorhergehenden Ansprüche, **dadurch gekennzeichnet, dass** zur Auswertung der Häufigkeitsverteilung (5, 13) eine Referenz-Häufigkeitsvertellung gebildet und mit der Häufigkeitsverteilung (5, 13) verglichen wird.

**6.** Verfahren nach Anspruch 5, **dadurch gekennzeichnet, dass** eine Referenz-Häufigkeitsverteilung gelernt wird, indem die ermittelten Verbrauchsstromwerte ($\dot{V}$) der Referenz-Häufigkeitsverteilung hinzugefügt werden.

**7.** Verfahren nach einem der vorherstehenden Ansprüchen, **dadurch gekennzeichnet, dass** zur Auswertung der Häufigkeitsverteilung (5, 13) die relative Anzahl von Verbrauchsstromwerten ($\dot{V}$) mit einer diesem Verbrauchsstromwert ($\dot{V}$) zugeordneten Zugehörigkeitsfunktion bewertet wird und dass die Bewertungen der Zugehörigkeitsfunktionen verschiedener Verbrauchsstromwerte ($\dot{V}$) zu einer Bewertung des Verbrauchs zusammengefasst werden.

**8.** Verfahren nach einem der vorhergehenden Ansprüche, **dadurch gekennzeichnet, dass** der Verbrauchsstromwert ($\dot{V}$) aus der Differenz zweier Verbrauchszähler (7, 10) gebildet wird.

**9.** Verfahren nach einem der vorhergehenden Ansprüche, **dadurch gekennzeichnet, dass** das Verfahren in einem Verbrauchszähler (1) oder einer Datensammeistelle (8) durchgeführt wird.

**10.** Verfahren nach einem der vorhergehenden Ansprüche, **dadurch gekennzeichnet, dass** bei dem Feststellen einer Leckage des Mediums in dem Versorgungssystem aus der Häufigkeitsverteilung (5, 13) der einzelnen Verbrauchswerte ($\dot{V}$) die Menge des ausgetretenen Mediums ermittelt wird.

**11.** Vorrichtung zum Bewerten des Verbrauchs eines Mediums in einem Versorgungssystem mittels mindestens eines Verbrauchszählers (1, 7, 10), wobei die Vorrichtung einen Speicher zum Speichern von Verbrauchswerten ($\dot{V}$) mindestens des einen Verbrauchszählers (1, 7, 10) und eine an den Speicher angeschlossene Recheneinheit aufweist, welche zur Bewertung des Verbrauchs anhand der erfassten Verbrauchswerte ($\dot{V}$) eingerichtet ist, **dadurch gekennzeichnet, dass** die Recheneinheit zur Durchführung des Verfahrens nach einem der Ansprüche 1 bis 10 eingerichtet ist.

**12.** Vorrichtung nach 11, **dadurch gekennzeichnet, dass** die Vorrichtung in einem Verbrauchszähler (1, 7, 10) mit integriert ist.

**13.** Vorrichtung nach einem der Ansprüche 11 oder 12. **dadurch gekennzeichnet, dass** die Vorrichtung in einer Datensammelstelle (8) mit integriert ist, an welche mindestens ein Verbrauchszäher (1, 7, 10) angeschlossen ist.

**Claims**

**1.** A method for assessing the consumption of a medium in a supply system by means of at least one consumption meter (1, 7, 10), in which consumption power data values ($\dot{V}$) for the medium are determined from consumption measurements ($V_{kum}$) of the consumption meter (1, 7, 10) recorded over time, wherein from the consumption power data values ($\dot{V}$) a frequency distribution (5, 13) is formed, in that the consumption power data values are classified into consumption flow classes ($K_1$) defined by means of boundary values that can be specified, and in each case the frequency of occurrence of consumption power data values ($\dot{V}$) are counted as entries in a consumption power class ($K_1$), and wherein the consumption is assessed by an evaluation of the frequency distribution (5, 13), **characterised in that**, for purposes of evaluating the frequency distribution (5, 13) so as to detect a leakage of the medium, the number of consumption power data values ($\dot{V}$) within consumption flow classes is compared with the number of consumption power data values ($\dot{V}$) within at least one other consumption power class.

**2.** The method in accordance with one of the preceding claims, **characterised in that**, the frequency distribution (5, 13) is formed over an evaluation time period that can be specified.

**3.** The method in accordance with one of the preceding claims, **characterised in that**, for purposes of evaluating the frequency distribution (5, 13) the number of consumption power data values ($\dot{V}$) is compared with threshold values that can be specified.

**4.** The method in accordance with Claim 3, **characterised in that**, the threshold values are trained.

**5.** The method in accordance with one of the preceding claims, **characterised in that**, for purposes of evaluating the frequency distribution (5, 13) a reference frequency distribution is formed, and compared with the frequency distribution (5, 13).

6. The method in accordance with Claim 6, **characterised in that**, a reference frequency distribution is trained, **in that** the consumption power data values ($\dot{V}$) determined are added to the reference frequency distribution.

7. The method in accordance with one of the preceding claims, **characterised in that**, for purposes of evaluating the frequency distribution (5, 13) the relative number of consumption power data values ($\dot{V}$) is assessed with a membership function associated with the said consumption power data value ($\dot{V}$), and **in that**, the assessments of the membership functions of various consumption power data values ($\dot{V}$) are summarised in an assessment of the consumption.

8. The method in accordance with one of the preceding claims, **characterised in that** the consumption power data value ($\dot{V}$) is formed from the difference between two consumption meters (7, 10).

9. The method in accordance with one of the preceding claims, **characterised in that**, the method is executed in a consumption meter (1) or a data collector (8).

10. The method in accordance with one of the preceding claims, **characterised in that**, in the course of establishing a leakage of the medium in the supply system from the frequency distribution (5, 13) of the individual consumption data values ($\dot{V}$) the quantity of the medium that has escaped is determined.

11. A device for purposes of assessing the consumption of medium in a supply system by means of at least one consumption meter (1, 7, 10), wherein the device has a memory for purposes of storing consumption data values ($\dot{V}$) of the at least one consumption meter (1, 7, 10), and a computing unit connected to the memory, which is constituted for purposes of assessing the consumption on the basis of the recorded consumption data values ($\dot{V}$), **characterised in that**, the computing unit (1) is constituted for purposes of executing the method in accordance with one of the Claims 1 to 10.

12. The device in accordance with Claim 11, **characterised in that**, the device is integrated in a consumption meter (1, 7, 10).

13. The device in accordance with one of the Claims 11 or 12, **characterised in that**, the device is integrated in a data collector (8), to which at least one consumption meter (1, 7, 10) is connected.

**Revendications**

1. Procédé pour l'évaluation de la consommation d'un milieu dans un système d'alimentation au moyen d'au moins un compteur de consommation (1, 7, 10), dans lequel on détermine, à partir de valeurs de consommation ($V_{kum}$) détectées dans le temps du compteur de consommation (1, 7, 10), des valeurs de courant de consommation ($\dot{V}$) pour le milieu, dans lequel on forme une répartition de la fréquence (5, 13) à partir des valeurs de courant de consommation ($\dot{V}$) en classant les valeurs de courant de consommation pour la formation de la répartition de la fréquence (5, 13) en classes de courant de consommation ($K_1$) définies grâce à des valeurs limites prescriptibles, et la fréquence de l'apparition de valeurs de courant de consommation ($\dot{V}$) étant respectivement comptée en tant qu'entrées dans une classe de courant de consommation ($K_1$) et dans lequel la consommation est estimée grâce à une évaluation de la répartition de la fréquence (5, 13), **caractérisé en ce que**, pour l'évaluation de la répartition de la fréquence (5, 13) pour la reconnaissance d'une fuite du milieu, on compare le nombre de valeurs de courant de consommation ($\dot{V}$) à l'intérieur de classes de courant de consommation avec le nombre de valeurs de courant de consommation ($\dot{V}$) à l'intérieur d'au moins une autre classe de courant de consommation.

2. Procédé selon l'une des revendications précédentes, **caractérisé en ce que** la répartition de la fréquence (5, 13) est formée sur un intervalle de temps d'évaluation prescriptible.

3. Procédé selon l'une des revendications précédentes, **caractérisé en ce que**, pour l'évaluation de la répartition de la fréquence (5, 13), on compare le nombre de valeurs de courant de consommation ($\dot{V}$) avec des valeurs de seuil prescriptibles.

4. Procédé selon la revendication 3, **caractérisé en ce que** les valeurs de seuil font l'objet d'un apprentissage.

5. Procédé selon l'une des revendications précédentes, **caractérisé en ce que**, pour l'évaluation de la répartition de la fréquence (5, 13), on forme une répartition de fréquence de référence et la compare avec la répartition de la fréquence (5, 13).

6. Procédé selon la revendication 5, **caractérisé en ce qu'**une répartition de fréquence de référence fait l'objet d'un apprentissage **en ce que** les valeurs de courant de consommation ($\dot{V}$) déterminées sont ajoutées à la répartition de fréquence de référence.

7. Procédé selon l'une des revendications précédentes, **caractérisé en ce que**, pour l'évaluation de la répartition de la fréquence (5, 13), on estime le nombre relatif de valeurs de courant de consommation ($\dot{V}$) avec une fonction d'appartenance associée à cette valeur de courant de consommation ($\dot{V}$) et **en ce que** les évaluations des fonctions d'appartenance de différentes valeurs de courant de consommation ($\dot{V}$) sont regroupées en une estimation de la consommation.

8. Procédé selon l'une des revendications précédentes, **caractérisé en ce que** la valeur de courant de consommation ($\dot{V}$) est formée à partir de la différence entre deux compteurs de consommation (7, 10).

9. Procédé selon l'une des revendications précédentes, **caractérisé en ce que** le procédé est exécuté dans un compteur de consommation (1) ou une centrale de collecte de données (8).

10. Procédé selon l'une des revendications précédentes, **caractérisé en ce que**, lors du constat d'une fuite du milieu dans le système d'alimentation, on détermine la quantité du milieu s'étant échappé à partir de la répartition de la fréquence (5, 13) des valeurs de consommation ($\dot{V}$) individuelles.

11. Dispositif pour l'évaluation de la consommation d'un milieu dans un système d'alimentation au moyen d'au moins un compteur de consommation (1, 7, 10), dans lequel le dispositif présente une mémoire pour garder en mémoire des valeurs de consommation ($\dot{V}$) de l'un au moins des compteurs de consommation (1, 7, 10) et une unité de calcul connectée à la mémoire, laquelle est étudiée pour l'évaluation de la consommation à l'aide des valeurs de consommation ($\dot{V}$) détectées, **caractérisé en ce que** l'unité de calcul est étudiée pour exécuter le procédé selon l'une des revendications 1 à 10.

12. Dispositif selon la revendication 11, **caractérisé en ce que** le dispositif est intégré dans un compteur de consommation (1, 7, 10).

13. Dispositif selon l'une des revendications 11 ou 12, **caractérisé en ce que** le dispositif est intégré dans une centrale de collecte de données (8) à laquelle au moins un compteur de consommation (1, 7, 10) est connecté.

Fig. 1

Fig. 2

Fig. 3

Fig. 4

Fig. 5

Fig. 6

EP 2 721 376 B1

$(\dot{V})^{(I)}$

Fig. 7

Fig. 8

Fig. 9

21

Fig. 10

Fig. 11

Fig. 12a — rel. Anzahl Klasse 1

Fig. 12b — rel. Anzahl Restklassen

Fig. 12c — Wahrscheinlichkeit f. Wasserklau

| Anzahl Klasse 1 | Anzahl Restklassen | Wahrscheinlichkeit Wasserklau |
|---|---|---|
| Sehr hoch | 0 | Sehr niedrig |
| Sehr hoch | >0 | Niedrig |
| Hoch | 0 | Sehr niedrig |
| Hoch | >0 | Hoch |
| Mittel | 0 | Sehr niedrig |
| Mittel | >0 | Sehr Hoch |
| Gering | 0 | Sehr niedrig |
| Gering | >0 | Sehr hoch |

Fig. 12d

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004016378
- DE 102006013610 B4
- WO 2007047847 A2
- DE 19706564 A1
- DE 69209624 T2
- WO 02077581 A1
- WO 2005047828 A1
- US 20060059977 A1